# EUROPEAN PATENT APPLICATION

(11) **EP 4 657 797 A1**
(43) Date of publication of application: **03.12.2025**
(21) Application number: 23920442.3
(22) Date of filing: 09.02.2023
(51) Int. Cl.: H04L 9/32, H04W 12/06

(54) **MEASUREMENT METHOD AND RELATED DEVICE THEREOF**

(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN); SONG, Yurong, Shenzhen, Guangdong 518129 (CN)
(74) Representative: Thun, Clemens
(86) International application number: PCT/CN2023/075222
(87) International publication number: WO 2024/164234

(57) **Abstract**

This application provides an attestation method and a related device thereof. According to the technical solutions provided in this application, trusted attestation can be performed on a terminal. In the attestation method, a first network element receives first attestation information from a terminal. The first network element obtains a first trusted attestation result of the terminal based on the first attestation information and first expected information. It can be learned that, in the attestation method in embodiments of this application, the first network element obtains the first trusted attestation result of the terminal based on the first expected information and the first attestation information from the terminal, to implement trusted attestation of the terminal.

## Description

### TECHNICAL FIELD

This application relates to the field of communication technologies, and in particular, to an attestation method and a related device thereof.

### BACKGROUND

A network side determines security of a terminal device side based on a subscriber identity module (subscriber identity module, SIM) card. The terminal device is briefly referred to as a terminal, or is referred to as user equipment (user equipment, UE). Basic security logic is that the SIM card and the network side jointly hold a shared key, and a user performs an operation on the shared key in a network access process, to perform authentication and authorization.

It can be learned that end-to-end security verification between a network and the UE is verification from a network end to a SIM card end, but trustworthiness of a hardware device of the UE is not determined.

### SUMMARY

This application provides an attestation method and a related device thereof, to perform trusted attestation on a terminal.

According to a first aspect, this application provides an attestation method. The attestation method is applied to a first network element. The first network element is a network element having a trusted attestation capability.

The attestation method includes the following steps: The first network element receives first attestation information from a terminal. The first network element obtains a first trusted attestation result of the terminal based on the first attestation information and first expected information.

In this solution, the first network element obtains the first trusted attestation result of the terminal based on the first expected information and the first attestation information from the terminal, to implement trusted attestation of the terminal, that is, determine whether the terminal is trustworthy.

With reference to a possible implementation of the first aspect, the first attestation information includes a first check value, the first check value is obtained by processing a first random number and local attestation information by using a symmetric key, and the symmetric key is a key used for trusted attestation. The symmetric key means that the terminal and the first network element have a same key used for trusted attestation.

With reference to a possible implementation of the first aspect, the first expected information includes a first expected check value. The first expected check value is obtained by processing the first random number and first expected attestation information by using the symmetric key. The first expected attestation information is a reference value of the local attestation information of the terminal.

In this application, the first check value is obtained by processing the first random number and the local attestation information by using the symmetric key, so that the first network element can verify trustworthiness of the terminal based on the first check value and the first expected check value. The terminal is trustworthy if the first check value is the same as the first expected check value; or the terminal is untrustworthy if the first check value is different from the first expected check value.

With reference to a possible implementation of the first aspect, the first attestation information further includes the local attestation information of the terminal.

With reference to a possible implementation of the first aspect, the first expected information further includes the first expected attestation information.

In this application, when the first check value is the same as the first expected check value, and the local attestation information is the same as the first expected attestation information, the first network element may determine that the terminal is trustworthy; or when the first check value is different from the first expected check value, and/or the local attestation information is different from the first expected attestation information, the first network element determines that the terminal is untrustworthy. In this application, trusted verification is performed by verifying whether the two groups of parameters, namely, the first check value and the first expected check value, and the local attestation information and the first expected attestation information each are the same, to ensure higher reliability of a trusted attestation result of the terminal.

With reference to a possible implementation of the first aspect, before the first network element receives the first attestation information from the terminal, the method further includes: The first network element receives a first attestation request from a second network element. The first attestation request includes identification information of the terminal. The first network element sends a second attestation request to the terminal. The second attestation request includes the first random number, and the first random number corresponds to the identification information of the terminal.

Therefore, in this application, the first network element starts trusted attestation of the terminal in response to the first attestation request sent by the second network element. Because the first random number corresponds to the identification information of the terminal, the first network element may obtain the first random number based on the identification information of the terminal. Then, the first network element sends the second attestation request to the terminal. The second attestation request includes the first random number. In this way, the terminal may generate the first check value based on the first random number and the local attestation information.

With reference to a possible implementation of the first aspect, the attestation method further includes the following steps:
The first network element obtains a first trusted vector corresponding to the identification information of the terminal. The first trusted vector includes the first expected information.

In this application, the first network element may obtain the first trusted vector corresponding to the identification information of the terminal based on the identification information of the terminal, to obtain the first expected information.

With reference to a possible implementation of the first aspect, a specific implementation in which the first network element obtains the first trusted vector corresponding to the identification information of the terminal includes: The first network element sends a trusted vector request to a third network element. The trusted vector request includes the identification information of the terminal. The first network element receives the first trusted vector that corresponds to the identification information of the terminal and that is sent by the third network element.

In this application, the first network element may initiate the trusted vector request to the third network element, to obtain the first trusted vector. The third network element may obtain the first trusted vector based on the identification information of the terminal.

With reference to a possible implementation of the first aspect, another specific implementation in which the first network element obtains the first trusted vector corresponding to the identification information of the terminal includes: The first network element receives the first trusted vector from an authentication network element.

In this application, the authentication network element may send the first trusted vector to the first network element, so that the first network element obtains the first trusted vector.

With reference to a possible implementation of the first aspect, the first trusted vector further includes the symmetric key. For example, the first network element may perform key derivation based on the symmetric key. For another example, the first network element may reprocess the first random number and the first expected attestation information by using the symmetric key, to obtain a new check value, and verify the first check value based on the new check value.

With reference to a possible implementation of the first aspect, the symmetric key is any one of the following:
a root key used for trusted attestation;
a first derived key, where the first derived key is derived from the root key used for trusted attestation;
a second derived key, where the second derived key is derived from a root key used for authentication; and
a third derived key, where the third derived key is derived from an authentication key, and the authentication key is derived from the root key used for authentication.

When the symmetric key is the second derived key or the third derived key, the terminal does not need to set the root key used for trusted attestation, and may obtain the second derived key or the third derived key by using the root key used for authentication.

With reference to a possible implementation of the first aspect, the attestation method further includes the following step: The first network element performs key derivation based on the symmetric key, to obtain a fourth derived key. The fourth derived key is either of the following: a first anchor key and the authentication key.

With reference to a possible implementation of the first aspect, the attestation method further includes the following step: The first network element sends a second trusted vector to the second network element or a first node. The second trusted vector includes second expected information, the second trusted vector is used by the second network element or the first node to perform trusted attestation on the terminal, and the second expected information includes a second expected check value.

In this application, the first network element sends the second trusted vector to the second network element or the first node, so that the second network element or the first node may perform trusted attestation on the terminal based on the second expected information, and deploy the trusted attestation capability on the second network element or the first node. The first node may be an access network device.

For example, the second network element or the first node performs trusted attestation based on second attestation information of the terminal and the second expected information. The second attestation information includes a second check value, the second check value is obtained by processing a second random number and the local attestation information of the terminal by using a fifth derived key, and the fifth derived key is derived from the symmetric key. The second expected check value is obtained by processing the second random number and second expected attestation information by using the fifth derived key, and the second expected attestation information is the same as the first expected attestation information. When performing trusted attestation on the terminal, the second network element or the first node may learn, through comparison, of whether the second check value is the same as the second expected check value. The terminal is trustworthy if the second check value is the same as the second expected check value; or the terminal is untrustworthy if the second check value is different from the second expected check value.

With reference to a possible implementation of the first aspect, the second expected information further includes the second expected attestation information. For example, the second attestation information further includes the local attestation information of the terminal. In this application, when the second check value is the same as the second expected check value, and the local attestation information is the same as the second expected attestation information, the second network element or the first node determines that the terminal is trustworthy; or when the second check value is different from the second expected check value, and/or the local attestation information is different from the second expected attestation information, the terminal is untrustworthy. In this application, trusted verification is performed by verifying whether the two groups of parameters, namely, the second check value and the second expected check value, and the local attestation information and the second expected attestation information each are the same, to ensure higher reliability of the trusted attestation result of the terminal.

In this application, similar to the first trusted vector, the second trusted vector may further include the fifth derived key, so that the second network element or the first node may use the fifth derived key. For example, the second network element or the first node may perform key derivation based on the fifth derived key. For another example, the second network element or the first node may reprocess the second random number and the second expected attestation information by using the fifth derived key, to obtain a new check value, and verify the second check value based on the new check value.

With reference to a possible implementation of the first aspect, the attestation method further includes the following step: The first network element receives the second trusted vector from the third network element.

In this application, after determining the second trusted vector, the third network element may send the second trusted vector to the first network element.

With reference to a possible implementation of the first aspect, the attestation method further includes the following step: The first network element sends a third trusted vector to the second network element or a first node. The third trusted vector includes a fifth derived key and second expected attestation information, the third trusted vector is used by the second network element or the first node to perform trusted attestation on the terminal, and the fifth derived key is derived from the symmetric key.

In this application, another method for deploying the trusted attestation capability on the second network element or the first node is provided. The first network element sends the third trusted vector to the second network element or the first node, the second network element or the first node generates the second random number corresponding to the identification information of the terminal, and the second network element or the first node processes the second random number and the second expected attestation information based on the fifth derived key, to obtain the second expected check value. The second network element or the first node may perform trusted attestation of the terminal based on the second expected check value, or the second network element or the first node performs trusted attestation of the terminal based on the second expected attestation information and the second expected check value, or the second network element or the first node performs trusted attestation of the terminal based on the second random number, the second expected attestation information, and the second expected check value.

With reference to a possible implementation of the first aspect, the attestation method further includes the following step: The first network element receives the third trusted vector from the third network element.

In this application, after determining the third trusted vector, the third network element may send the third trusted vector to the first network element.

With reference to a possible implementation of the first aspect, the attestation method further includes the following step: The first network element sends the first trusted attestation result to the terminal.

In this application, the first network element feeds back a trusted attestation result of the terminal to the terminal, so that the terminal obtains the trusted attestation result of the terminal.

According to a second aspect, this application further provides an attestation method. The method is applied to a terminal, and the terminal is a device having a trusted attestation requirement.

The attestation method includes the following steps: The terminal determines first attestation information. The terminal sends the first attestation information to a first network element.

In this solution, after determining the first attestation information, the terminal sends the first attestation information to the first network element, so that the first network element obtains a first trusted attestation result of the terminal based on first expected information and the first attestation information from the terminal, to implement trusted attestation of the terminal, that is, determine whether the terminal is trustworthy.

With reference to a possible implementation of the second aspect, the first attestation information includes a first check value, the first check value is obtained by processing a first random number and local attestation information by using a symmetric key, and the symmetric key is a key used for trusted attestation. Correspondingly, the first expected information includes a first expected check value. The first network element can verify trustworthiness of the terminal based on the first check value and the first expected check value. The terminal is trustworthy if the first check value is the same as the first expected check value; or the terminal is untrustworthy if the first check value is different from the first expected check value.

With reference to a possible implementation of the second aspect, the first attestation information further includes the local attestation information of the terminal. Correspondingly, the first expected information further includes first expected attestation information.

In this application, trusted verification is performed by verifying whether the two groups of parameters, namely, the first check value and the first expected check value, and the local attestation information and the first expected attestation information each are the same, to ensure higher reliability of a trusted attestation result of the terminal.

With reference to a possible implementation of the second aspect, before the terminal determines the first attestation information, the attestation method further includes: The terminal receives a second attestation request from the first network element. The second attestation request includes the first random number.

With reference to a possible implementation of the second aspect, the symmetric key is any one of the following:
a root key used for trusted attestation;
a first derived key, where the first derived key is derived from the root key used for trusted attestation;
a second derived key, where the second derived key is derived from a root key used for authentication; and
a third derived key, where the third derived key is derived from an authentication key.

With reference to a possible implementation of the second aspect, the attestation method further includes the following step: The terminal receives the first trusted attestation result of the terminal from the first network element. The first trusted attestation result is obtained based on the first attestation information and the first expected information.

With reference to a possible implementation of the second aspect, the attestation method further includes the following step: The terminal sends second attestation information to a second network element or a first node. In this way, the second network element or the first node may perform trusted attestation of the terminal based on the second attestation information and second expected information.

According to a third aspect, this application further provides an attestation method. The attestation method is applied to a first network element and a second network element.

The attestation method includes the following steps: The second network element sends a first attestation request to the first network element. The first attestation request includes identification information of a terminal. The first network element receives first attestation information from the terminal. The first network element obtains a first trusted attestation result of the terminal based on the first attestation information and first expected information.

In this application, the first network element starts trusted attestation of the terminal in response to the first attestation request sent by the second network element. After the first network element receives the first attestation information of the terminal, the first network element obtains the first trusted attestation result of the terminal based on the first expected information and the first attestation information, to implement trusted attestation of the terminal.

With reference to a possible implementation of the third aspect, the first attestation information includes a first check value, the first check value is obtained by processing a first random number and local attestation information by using a symmetric key, and the symmetric key is a key used for trusted attestation. Correspondingly, the first expected information includes a first expected check value. In this application, the first network element can verify trustworthiness of the terminal based on the first check value and the first expected check value. The terminal is trustworthy if the first check value is the same as the first expected check value; or the terminal is untrustworthy if the first check value is different from the first expected check value.

With reference to a possible implementation of the third aspect, the first attestation information further includes the local attestation information of the terminal. Correspondingly, the first expected information further includes first expected attestation information. In this application, trusted verification is performed by verifying whether the two groups of parameters, namely, the first check value and the first expected check value, and the local attestation information and the first expected attestation information each are the same, to ensure higher reliability of a trusted attestation result of the terminal.

With reference to a possible implementation of the third aspect, before the first network element receives the first attestation information from the terminal, the attestation method further includes the following step: The first network element sends a second attestation request to the terminal. The second attestation request includes the first random number, and the first random number corresponds to the identification information of the terminal.

With reference to a possible implementation of the third aspect, the attestation method further includes the following step: The first network element obtains a first trusted vector corresponding to the identification information of the terminal. The first trusted vector includes the first expected information.

With reference to a possible implementation of the third aspect, the attestation method further includes the following steps:
The first network element sends a trusted vector request to a third network element. The trusted vector request includes the identification information of the terminal.

The third network element sends the first trusted vector corresponding to the identification information of the terminal to the first network element.

With reference to a possible implementation of the third aspect, the attestation method further includes the following step: The first network element receives the first trusted vector from an authentication network element.

With reference to a possible implementation of the third aspect, the symmetric key is any one of the following:
a root key used for trusted attestation;
a first derived key, where the first derived key is derived from the root key used for trusted attestation;
a second derived key, where the second derived key is derived from a root key used for authentication; and
a third derived key, where the third derived key is derived from an authentication key.

With reference to a possible implementation of the third aspect, the attestation method further includes: The first network element performs key derivation based on the symmetric key, to obtain a fourth derived key. The fourth derived key is either of the following: a first anchor key and the authentication key.

With reference to a possible implementation of the third aspect, the attestation method further includes: The first network element sends a second trusted vector to the second network element or a first node. The second trusted vector includes second expected information, the second trusted vector is used by the second network element or the first node to perform trusted attestation on the terminal, and the second expected information includes a second expected check value.

With reference to a possible implementation of the third aspect, the attestation method further includes: The third network element sends a second trusted vector to the first network element.

With reference to a possible implementation of the third aspect, the attestation method further includes: The first network element sends a third trusted vector to the second network element or a first node. The third trusted vector includes a fifth derived key and second expected attestation information, the third trusted vector is used by the second network element or the first node to perform trusted attestation on the terminal, and the fifth derived key is derived from the symmetric key. The second network element or the first node obtains a second random number. The second network element or the first node obtains the second expected check value based on the fifth derived key, the second random number, and the second expected attestation information.

With reference to a possible implementation of the third aspect, the attestation method further includes: The third network element sends the third trusted vector to the first network element.

With reference to a possible implementation of the third aspect, the attestation method further includes: The second network element or the first node receives second attestation information of the terminal. The second network element or the first node obtains a second trusted attestation result of the terminal based on the second attestation information and the second expected information.

With reference to a possible implementation of the third aspect, the attestation method further includes: The second network element or the first node sends the second trusted attestation result to the terminal.

With reference to a possible implementation of the third aspect, the attestation method further includes: The first network element sends the first trusted attestation result to the terminal.

According to a fourth aspect, this application further provides an attestation method. The method is applied to a second node.

The attestation method includes the following steps: The second node sends a third attestation request to a third node. The second node receives third attestation information from the third node. The second node obtains a trusted attestation result of the third node based on the third attestation information and third expected information.

In this solution, the second node initiates trusted attestation of the third node, and performs trusted attestation on the third node based on the third expected information and the third attestation information from the third node, to obtain the trusted attestation result of the third node, that is, determines whether the third node is trustworthy.

With reference to a possible implementation of the fourth aspect, the third attestation information includes a third check value, the third check value is obtained by processing a third random number and local attestation information by using a symmetric key, and the symmetric key is a key used for trusted attestation.

With reference to a possible implementation of the fourth aspect, the third expected information includes a third expected check value. In this application, when performing trusted attestation on the third node, the second node may learn, through comparison, of whether the third check value is the same as the third expected check value. The third node is trustworthy if the third check value is the same as the third expected check value; or the third node is untrustworthy if the third check value is different from the third expected check value.

With reference to a possible implementation of the fourth aspect, the third attestation information further includes local attestation information of the third node.

With reference to a possible implementation of the fourth aspect, the third expected information further includes third expected attestation information.

In this application, when the third check value is the same as the third expected check value, and the local attestation information of the third node is the same as the third expected attestation information, the second node determines that the third node is trustworthy; or when the third check value is different from the third expected check value, and/or the local attestation information of the third node is different from the third expected attestation information, the third node is untrustworthy. In this application, trusted verification is performed by verifying whether the two groups of parameters, namely, the third check value and the third expected check value, and the local attestation information of the third node and the third expected attestation information each are the same, to ensure higher reliability of the trusted attestation result of the third node.

With reference to a possible implementation of the fourth aspect, the attestation method further includes the following steps: The second node sends a trusted vector request to a third network element. The trusted vector request includes identification information of the third node. The second node receives a fourth trusted vector from the third network element. The fourth trusted vector includes the third expected information.

In this solution, the third network element receives the request of the second node, generates the fourth trusted vector, and returns the fourth trusted vector to the second node, so that the second node obtains the third expected information.

With reference to a possible implementation of the fourth aspect, the symmetric key is any one of the following:
a root key used for trusted attestation; and
a sixth derived key, where the sixth derived key is derived from the root key used for trusted attestation.

With reference to a possible implementation of the fourth aspect, the attestation method further includes: The second node sends the trusted attestation result to the third node.

According to a fifth aspect, this application further provides an attestation method. The method is applied to a third node.

The attestation method includes the following steps: The third node receives a third attestation request from a second node. The third node sends third attestation information to the second node. The third attestation information includes a third check value, the third check value is obtained by processing a third random number and local attestation information by using a symmetric key, and the symmetric key is a key used for trusted attestation.

In this solution, the third node sends the third attestation information to the second node in response to the third attestation request, so that the second node performs trusted attestation on the third node based on third expected information and the third attestation information, to obtain a trusted attestation result of the third node.

With reference to a possible implementation of the fifth aspect, the third expected information includes a third expected check value. The second node may verify trustworthiness of the third node based on the third check value and the third expected check value. The third node is trustworthy if the third check value is the same as the third expected check value; or the third node is untrustworthy if the third check value is different from the third expected check value.

With reference to a possible implementation of the fifth aspect, the third attestation information further includes local attestation information of the third node. Correspondingly, the third expected information further includes third expected attestation information. When the third check value is the same as the third expected check value, and the local attestation information of the third node is the same as the third expected attestation information, the second node may determine that the third node is trustworthy; or when the third check value is different from the third expected check value, and/or the local attestation information of the third node is different from the third expected attestation information, it is determined that the third node is untrustworthy. In this application, trusted verification is performed by verifying whether the two groups of parameters, namely, the third check value and the third expected check value, and the local attestation information of the third node and the third expected attestation information each are the same, to ensure higher reliability of the trusted attestation result of the third node.

With reference to a possible implementation of the fifth aspect, the symmetric key is any one of the following:
a root key used for trusted attestation; and
a sixth derived key, where the sixth derived key is derived from the root key used for trusted attestation.

With reference to a possible implementation of the fifth aspect, the attestation method further includes: The third node receives a trusted attestation result of the third node from the second node. The trusted attestation result is obtained based on the third attestation information and third expected information.

According to a sixth aspect, this application further provides an attestation method. The method is applied to a second node and a third node.

The attestation method includes the following steps: The second node sends a third attestation request to the third node. The third node sends third attestation information to the second node. The second node obtains a trusted attestation result of the third node based on the third attestation information and third expected information.

With reference to a possible implementation of the sixth aspect, the third attestation information includes a third check value, the third check value is obtained by processing a third random number and local attestation information by using a symmetric key, and the symmetric key is a key used for trusted attestation. Correspondingly, the third expected information includes a third expected check value. The second node may verify trustworthiness of the third node based on the third check value and the third expected check value. The third node is trustworthy if the third check value is the same as the third expected check value; or the third node is untrustworthy if the third check value is different from the third expected check value.

With reference to a possible implementation of the sixth aspect, the third attestation information further includes local attestation information of the third node. Correspondingly, the third expected information further includes third expected attestation information. In this application, trusted verification is performed by verifying whether the two groups of parameters, namely, the third check value and the third expected check value, and the local attestation information of the third node and the third expected attestation information each are the same, to ensure higher reliability of the trusted attestation result of the third node.

With reference to a possible implementation of the sixth aspect, the attestation method further includes the following steps: The second node sends a trusted vector request to a third network element. The trusted vector request includes identification information of the third node. The third network element sends a fourth trusted vector to the second node. The fourth trusted vector includes the third expected information.

With reference to a possible implementation of the sixth aspect, the symmetric key is any one of the following:
a root key used for trusted attestation; and
a sixth derived key, where the sixth derived key is derived from the root key used for trusted attestation.

With reference to a possible implementation of the sixth aspect, the attestation method further includes: The third node receives a trusted attestation result from the second node.

According to a seventh aspect, this application further provides a first network element, including a receiving module and a processing module.

The receiving module is configured to receive first attestation information from a terminal.

The processing module is configured to obtain a first trusted attestation result of the terminal based on the first attestation information and first expected information.

According to an eighth aspect, this application further provides a terminal, including a determining module and a sending module.

The determining module is configured to determine first attestation information.

The sending module is configured to send the first attestation information to a first network element.

According to a ninth aspect, this application further provides a communication system. The system includes a first network element and a second network element.

The second network element is configured to send a first attestation request to the first network element. The first attestation request includes identification information of a terminal.

The first network element is configured to receive first attestation information from the terminal.

The first network element is further configured to obtain a first trusted attestation result of the terminal based on the first attestation information and first expected information.

According to a tenth aspect, this application further provides a second node, including a sending module, a receiving module, and a determining module.

The sending module is configured to send a third attestation request to a third node.

The receiving module is configured to receive third attestation information from the third node.

The determining module is configured to obtain a trusted attestation result of the third node based on the third attestation information and third expected information.

According to an eleventh aspect, this application further provides a third node, including a receiving module and a sending module.

The receiving module is configured to receive a third attestation request from a second node.

The sending module is configured to send third attestation information to the second node. The third attestation information includes a third check value, the third check value is obtained by processing a third random number and local attestation information of the third node by using a symmetric key, and the symmetric key is a key used for trusted attestation.

According to a twelfth aspect, this application further provides a communication system. The system includes a second node and a third node.

The second node is configured to send a third attestation request to the third node.

The third node is configured to send third attestation information to the second node.

The second node is further configured to obtain a trusted attestation result of the third node based on the third attestation information and third expected information.

According to a thirteenth aspect, this application further provides a communication apparatus. The communication apparatus includes one or more processors and one or more memories. The one or more memories are coupled to the one or more processors, the one or more memories are configured to store computer program code, the computer program code includes computer instructions, and when the one or more processors execute the computer instructions, the communication apparatus is enabled to perform the method according to any one of the first aspect to the sixth aspect.

According to a fourteenth aspect, this application further provides a computer-readable storage medium. The computer-readable storage medium stores instructions, and when the instructions are executed by a processor, the method according to any one of the first aspect to the sixth aspect is implemented.

According to a fifteenth aspect, this application further provides a computer program product, including a computer program. When the computer program runs on a processor, the method according to any one of the first aspect to the sixth aspect is implemented.

### BRIEF DESCRIPTION OF DRAWINGS

FIG. 1 is a diagram of a structure of an attestation system architecture according to an embodiment of this application;
FIG. 2A is a diagram of a network architecture according to an embodiment of this application;
FIG. 2B is a diagram of another network architecture according to an embodiment of this application;
FIG. 2C is a diagram of an authentication procedure according to an embodiment of this application;
FIG. 3 is a flowchart of an attestation method according to an embodiment of this application;
FIG. 4A is a diagram of a trusted attestation procedure according to an embodiment of this application;
FIG. 4B is a diagram of a key architecture according to an embodiment of this application;
FIG. 4C is an interaction flowchart of an attestation method according to an embodiment of this application;
FIG. 4D is a diagram of another key architecture according to an embodiment of this application;
FIG. 4E is an interaction flowchart of another attestation method according to an embodiment of this application;
FIG. 4F is a diagram of another key architecture according to an embodiment of this application;
FIG. 4G is an interaction flowchart of another attestation method according to an embodiment of this application;
FIG. 4H is a diagram of another key architecture according to an embodiment of this application;
FIG. 4I is an interaction flowchart of another attestation method according to an embodiment of this application;
FIG. 4J is an interaction flowchart of another attestation method according to an embodiment of this application;
FIG. 4K is an interaction flowchart of another attestation method according to an embodiment of this application;
FIG. 5 is a flowchart of another attestation method according to an embodiment of this application;
FIG. 6A is a diagram of another trusted attestation procedure according to an embodiment of this application;
FIG. 6B is an interaction flowchart of another attestation method according to an embodiment of this application;
FIG. 7 is a diagram of a structure of a first network element according to an embodiment of this application;
FIG. 8 is a diagram of a structure of a terminal according to an embodiment of this application;
FIG. 9 is a diagram of a structure of a second node according to an embodiment of this application;
FIG. 10 is a diagram of a structure of a third node according to an embodiment of this application; and
FIG. 11 is a diagram of a structure of a communication apparatus according to an embodiment of this application.

### DESCRIPTION OF EMBODIMENTS

Terms used in the following embodiments of this application are merely intended to describe specific embodiments, but are not intended to limit this application. The singular expressions "one", "one type of", "the", "the foregoing", "that", and "this" used in the specification and the appended claims of this application are also intended to include plural expressions, unless otherwise specified in the context clearly. It should be further understood that, the term "and/or" used in this application indicates and includes any one or all of possible combinations of one or more listed items.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

Because embodiments of this application are related to a method, for ease of understanding, the following first describes related terms and concepts in embodiments of this application.

### (1) Trusted computing

Trusted computing (trusted computing, TC) is a technology that enables a computer to run in an expected manner. "Trusted" emphasizes that a behavioral result is predictable and controllable. Trusted computing is enforced by computer hardware and software. A trusted technology for a computing system starts with a root of trust and evolves to trust in a hardware platform, an operating system, and an application. Management and authentication strength of each layer corresponds to trustworthiness of each layer. Further, trust is extended to the complete computer system, and protection measures are taken to ensure integrity of computer resources and expected computer behaviors, to improve trustworthiness of the computer system.

Trusted computing includes two different research directions. One research direction is to ensure trustworthiness of a trusted computing base (trusted computing base, TCB) by using a physical anti-tamper device, and construct a trusted computing system of the computer system by using the TCB as a trust anchor. The physical anti-tamper device is, for example, a trusted platform module (trusted platform module, TPM), and the TPM is a chip built inside a computer to provide a root of trust for the computer. The other research direction is to construct an isolated computing system to ensure trustworthiness of a code running environment of specific sensitive software. Evolution proceeds based on this idea, to develop a universal trusted execution environment (trusted execution environment, TEE) based on a special security mode of a central processing unit (central processing unit, CPU).

A type of trusted computing includes but is not limited to one or more of a TPM, a trusted cryptography module (trusted cryptography module, TCM), Intel software guard extensions (Intel software guard extensions, Intel SGX), and a trusted zone (trustedzone).

### (2) Trusted attestation technology

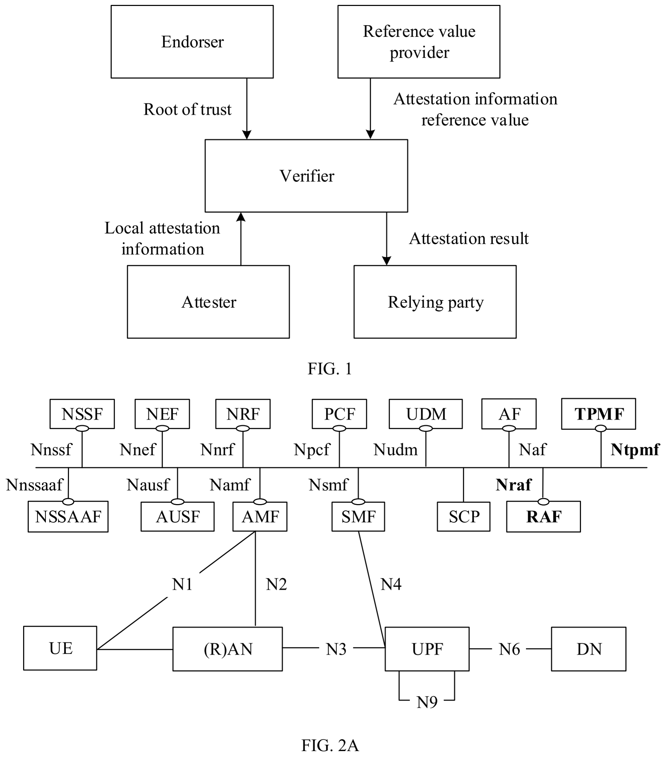

In the trusted attestation technology, an attestation value of hardware and software of a device is checked, to ensure that the device is not tampered with by an attacker. FIG. 1 shows an attestation system architecture. The architecture includes an endorser (endorser), a reference value provider (reference value provider), an attester (attester), a verifier (verifier), and a relying party (relying party). The endorser, the reference value provider, and the attester provide the verifier with information used to generate a trusted attestation result. The endorser provides an attester endorsement (attester endorsements), namely, a root of trust certificate. The root of trust certificate is used to determine that a security chip in the attester is trustworthy, and the certificate includes a public key. The reference value provider provides an attestation information reference value, namely, expected attestation information. The attestation information reference value is a reference value of local attestation information of the attester. The attester provides the local attestation information (evidence) to the verifier.

The attester is a device equipped with a trusted computing function. In a trusted computing technology, a TPM is used as an example. When the device is started, a TPM chip in the device obtains measurement values on a system and software of the system, and securely stores the measurement values (namely, local attestation information) in a platform configuration register (platform configuration register, PCR) of the device.

When performing trusted attestation verification on the attester, the verifier first proposes a challenge value (for example, a random number) to the attester. When the attester receives a request, the TPM chip calculates a digest of the local attestation information and the challenge value, and then signs the digest by using a private key of the TPM chip. The attester sends a signature, the local attestation information, and a digital certificate of the attester to the verifier.

After receiving the signature, the local attestation information, and the digital certificate of the attester, the verifier verifies two things: 1. Identity authenticity of the attester is verified, to verify whether the digital certificate sent by the attester is a certificate provided by an authorized TPM manufacturer for the TPM. 2. Trusted attestation information is verified. The local attestation information and the attestation information reference value are compared, to verify whether the local attestation information and the attestation information reference value are the same. Verification succeeds if the local attestation information and the attestation information reference value are the same. If both of the foregoing two checks are successful, the verifier may report an attestation result of the attester to the relying party (relying party). In addition, after verification succeeds, the verifier may perform key derivation by using the public key.

With reference to the foregoing terms, the following describes a method in some embodiments and a method in embodiments of this application.

The method in embodiments of this application may be applied to a future communication network such as a long term evolution (long term evolution, LTE) system, a long term evolution-advanced (long term evolution-advanced, LTE-A) system, an enhanced long term evolution-advanced (enhanced long term evolution-advanced, eLTE) technology, a new radio (New Radio, NR) system in a 5th generation (5th Generation, 5G) mobile communication system, or a 6th generation (6th Generation, 6G) mobile communication system, or may be extended to a similar wireless communication system such as a cellular system related to wireless fidelity (wireless fidelity, Wi-Fi), worldwide interoperability for microwave access (worldwide interoperability for microwave access, WiMAX), and a 3rd generation partnership project (3rd generation partnership project, 3GPP).

FIG. 2A shows a network architecture applied to an embodiment of this application. A 5G mobile communication system is used as an example to separately describe all network elements that may be used in the network architecture.
1. A terminal device is briefly referred to as a terminal, and is also referred to as user equipment (user equipment, UE). The terminal device may include various handheld devices, vehicle-mounted devices, wearable devices, or computing devices that have a wireless communication function, another processing device connected to a wireless modem, various forms of terminals, a mobile station (mobile station, MS), a terminal (terminal), a soft terminal, an access terminal, a subscriber unit (subscriber unit), a terminal device station, a mobile station (mobile station, MS), a remote station, a remote terminal, a mobile device, a terminal device proxy, a terminal device apparatus, and the like. For example, the terminal device may be a water meter, an electricity meter, or a sensor.
2. A radio access network (radio access network, RAN) is a network that includes a plurality of RAN nodes, and may implement a radio physical layer function, a resource scheduling and radio resource management function, a radio access control function, and a mobility management function. The RAN is connected to a user plane network element through a user plane interface N3, to transmit data of a terminal device. The RAN establishes a control plane signaling connection to an access and mobility management network element through a control plane interface N2, to implement a function such as radio access bearer control.

Specifically, a network access function may be provided for an authorized terminal device in a specific area, and transmission tunnels with different quality can be used based on a level of the terminal device, a service requirement, and the like.

The RAN can manage a radio resource, and provide an access service for the terminal device, to further complete forwarding of a control signal and data of the terminal device between the terminal device and a core network.

The radio access network may have any one of the following replacement words: an access network device and an access network (access network, AN). The access network device may be a base station, a continuously evolved NodeB (gNB), an evolved NodeB (evolved NodeB, eNB), a transmission reception point (transmission reception point, TRP), a central unit (central unit, CU) node, a distributed unit (distributed unit, DU) node, a transmission point (transmission point, TP), a receiving point (receiving point, RP), and the like. This is not limited herein. In this application, the radio access network is described by using the access network device as an example, and a function performed by the access network device is also applicable to another replacement word of the radio access network.

3. An access and mobility management function network element is mainly configured for mobility management, access management, and the like.

In a 5G communication system, the access and mobility management function network element may be an access and mobility management function (access and mobility management function, AMF) network element. In a future communication system, the access and mobility management function network element may still be an AMF network element, or may have another name. This is not limited in this application.

The AMF is mainly responsible for functions such as UE authentication, UE mobility management, network slice selection, and session management network element selection; serves as an anchor of an N1 and N2 signaling connection and provides routing of an N1/N2 session management (session management, SM) message for a session management network element; and maintains and manages status information of UE.

4. A session management network element is mainly configured for session management, internet protocol (internet protocol, IP) address allocation and management of a terminal device, selection of a manageable user plane function, a termination point of a policy control and charging function interface, a downlink data notification, and the like.

In a 5G communication system, the session management network element may be a session management function (session management function, SMF) network element. In a future communication system, the session management network element may still be an SMF network element, or may have another name. This is not limited in this application.

The SMF is mainly responsible for all control plane functions of UE session management, including user plane network element selection, IP address allocation, session QoS management, obtaining of policy and charging control (policy and charging control, PCC) information (from a policy control network element), and the like.

5. A user plane network element is configured for packet routing and forwarding, quality of service (quality of service, QoS) processing of user plane data, and the like.

In a 5G communication system, the user plane network element may be a user plane function (user plane function, UPF) network element. In a future communication system, the user plane network element may still be a UPF network element, or may have another name. This is not limited in this application.

The UPF mainly provides a service processing function of a user plane. As an anchor point of a protocol data unit (protocol data unit, PDU) session connection, the UPF is responsible for data packet filtering, service routing, packet forwarding, an anchor function, rate control, generation of charging information, QoS mapping and execution, identification and routing of an uplink identifier to a data network, notification triggering of downlink packet buffering and downlink data arrival, a connection to an external data network, and the like of user equipment.

6. A data management network element is configured to process a terminal device identifier, access authentication, registration, mobility management, and the like.

In a 5G communication system, the data management network element may be a unified data management (unified data management, UDM) network element. In a future communication system, the data management network element may still be a UDM network element, or may have another name. This is not limited in this application.

The UDM network element mainly manages and controls user data, for example, manages subscription information, including: obtaining subscription information from a data repository and providing the subscription information to another network element (for example, an AMF); generating a 3GPP authentication credential for UE; and registering and maintaining a network element (for example, an AMF represented by an AMF ID 1 is a current serving AMF of the UE) that currently serves the UE.

7. A data repository is configured to store user data.

In a 5G communication system, the data repository may be a unified data repository (Unified Data Repository, UDR). In a future communication system, the data repository may still be a UDR, or may have another name. This is not limited in this application.

The UDR is mainly configured to store user data, including subscription data invoked by a data management network element, policy information invoked by a policy control network element, structured data used for capability exposure, and application data invoked by a network capability exposure function (network exposure function, NEF) network element.

8. A network capability exposure function network element is configured for connection and interaction between another internal network element of a core network and an external application server of the core network, to provide network capability information to the external application server, or provide information about the external application server to a core network element.

In a 5G communication system, the network capability exposure network element may be an NEF network element. In a future communication system, the network capability exposure network element may still be an NEF, or may have another name. This is not limited in this application.

9. An application service network element interacts with a core network element to provide some services, for example, interacts with a policy control network element to perform service policy control, interacts with a network capability exposure network element to obtain some network capability information or provide some application information to a network, and provides some data network access point information to the policy control network element to generate routing information of a corresponding data service.

In a 5G communication system, the application service network element may be an application function (Application Function, AF) network element. In a future communication system, the application service network element may still be an AF network element, or may have another name. This is not limited in this application. For example, the application service network element may have any one of the following replacement words: an application server (application server, AS), an AF, a third party, a third-party application, a sensing application, a sensing client, an application (application, APP), an over the top (over the top, OTT) application, and the like. OTT means to provide various application services for a user over the Internet. The OTT application is an upper-layer application of a bearer network, for example, WeChat, Alipay, and Youku.

10. An authentication service network element is configured to perform security authentication on UE when the UE accesses a network.

In a 5G communication system, the authentication service network element may be an authentication server function (authentication server function, AUSF) network element. In a future communication system, the authentication service network element may still be an AUSF network element, or may have another name. This is not limited in this application. In addition, in this embodiment, the authentication service network element may also be understood as an authentication network element.

The 5G communication system is used as an example. For example, the AUSF receives a request of an AMF for performing identity authentication on the UE, requests a key from a UDM, and forwards, to the AMF for authentication processing, the key delivered by the UDM.

11. The network slice selection network element is configured to: select a slice instance set for UE, and determine an AMF set and allowed NSSAI for the UE. (NSSAI is short for network slice selection assistance information, namely, network slice selection assistance information/network slice selection assistance information. A network slice is uniquely identified by single S-NSSAI, and a set of one or more pieces of S-NSSAI is referred to as NSSAI.)

In a 5G communication system, the network slice selection network element may be a network slice selection function (network slice selection function, NSSF) network element. In a future communication system, the network slice selection network element may still be an NSSF network element, or may have another name. This is not limited in this application.

12. A policy control network element is a unified policy framework used to guide a network behavior, provides configuration policy information for UE, and provides policy rule information, and the like for a control plane function network element (for example, an AMF or an SMF network element).

In a 5G communication system, the policy control network element may be a policy control function (policy control function, PCF) network element. In a future communication system, the policy control network element may still be a PCF network element, or may have another name. This is not limited in this application.

13. A data network is a network used to transmit data.

In a 5G communication system, the data network may be a data network (data network, DN). In a future communication system, the data network may still be a DN, or may have another name. This is not limited in this application.

14. A network slice-specific authentication and authorization network element is configured to perform authentication and authorization on a specific network slice.

In a 5G communication system, the network slice-specific authentication and authorization network element may be a network slice-specific authentication and authorization function (network slice-specific authentication and authorization function, NSSAAF) network element. In a future communication system, the network slice-specific authentication and authorization network element may still be an NSSAAF network element, or may have another name. This is not limited in this application.

15. A service communication proxy (service communication proxy, SCP) is configured to implement a communication proxy function between network functions (network functions, NFs). The NFs do not need to directly communicate with each other; but instead, indirectly communicate with each other through the SCP. The SCP may simplify networking of signaling routing.

In a future communication system, the service communication proxy may alternatively have another name. This is not limited in this application.

16. A security anchor function (security anchor function, SEAF) network element is configured to hold a root key (referred to as an anchor key) for accessing a network. Usually, an AMF network element and the SEAF network element are co-deployed. The SEAF is a function provided by the AMF, and based on information received from UE and an AUSF, is responsible for processing authentication in a network (namely, an access network) that provides a service.

It should be noted that the "network element" may be implemented by software. Optionally, the "network element" may also be referred to as a module, or the like. This is not particularly limited in this application. In addition, in this application, for ease of understanding and description, the description of "network element" is omitted in partial descriptions. For example, the AMF network element is referred to as an AMF. In this case, the "AMF" is understood as the AMF network element or an AMF module. Descriptions of a same or similar situation are omitted below.

The network architecture may further include a network repository function (Network Repository Function, NRF) network element, configured to manage all NF network elements that support a service-based interface. These NF network elements need to be first registered with the NRF. When NFs search for each other, the NFs find each other by querying the NRF.

The network architecture may further include an operation administration and maintenance (operation administration and maintenance, OAM) network element. The OAM network element classifies network management work into three categories: operation (operation), administration (administration), and maintenance (maintenance) according to an actual requirement of network operation of an operator. The operation is mainly to complete daily work such as analysis, prediction, planning, and configuration performed on a network and a service, and the maintenance is mainly a daily operation activity such as testing and fault management performed on the network and the service.

For example, in this embodiment of this application, the NRF network element and/or the OAM network element may further have a remote attestation function, to provide a trusted attestation service. For example, the NRF network element is used as an example. The access network device has a trusted attestation capability or an attestation information verification capability. In this case, the NRF network element may send an attestation request to the access network device, the NRF receives attestation information returned by the access network device in response to the attestation request, the NRF network element determines a trusted attestation result of the access network device based on the attestation information and expected information, and the NRF network element provides the access network device with a trusted attestation result that indicates that the access network device is trustworthy or the access network device is untrustworthy.

For example, in this application, the network architecture may further include a remote attestation function (remote attestation function, RAF) network element, which is briefly referred to as an attestation network element. The attestation network element is configured to provide a trusted attestation service. For example, if the UE has the trusted attestation capability or the attestation information verification capability, the UE may request the attestation network element to perform trusted attestation, and the attestation network element provides the UE with a trusted attestation result that indicates that the UE is trustworthy or the UE is untrustworthy.

For example, in this application, the network architecture may further include a trust value data management function (trustworthiness profile management function, TPMF) network element, configured to provide the remote attestation function network element with trust value data related to an attested entity, namely, a trusted vector. The trust value data includes at least one of the following: a random number, a key used for trusted attestation, or expected attestation information of the attested entity.

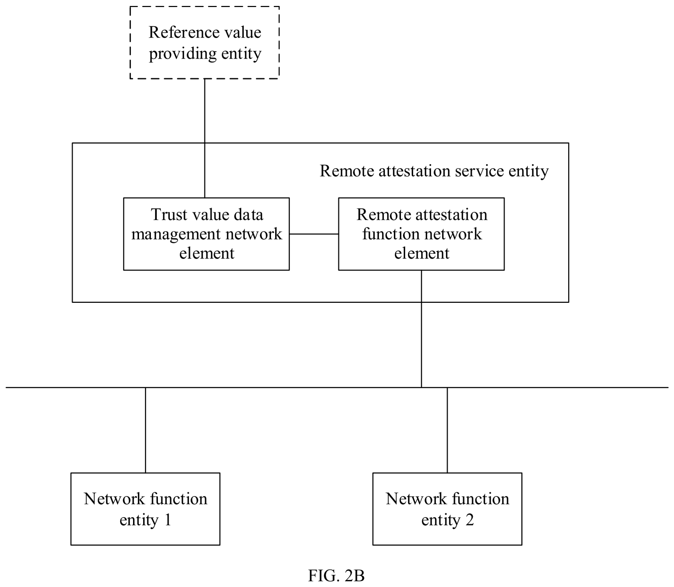

For example, FIG. 2B is a diagram of another network architecture according to an embodiment of this application. In this application, the network architecture may further include a reference value providing entity (reference value providers), configured to provide expected attestation information to a TPMF network element. The expected attestation information is a reference value of local attestation information of an entity having a trusted attestation requirement, namely, an attested entity (for example, UE, an NF, or a radio access network).

In addition, a network function entity 1 and a network function entity 2 in FIG. 2B are core network elements shown in FIG. 2A.

For example, in a 5G network, an attestation network element or the TPMF network element may be one of network elements in a 5G core network (5G core, 5GC). Alternatively, the attestation network element or the TPMF network element may be a non-core network element. Alternatively, the attestation network element and the TPMF network element may be independently deployed, or the attestation network element and the TPMF network element are co-deployed. As shown in FIG. 2B, the attestation network element and the TPMF network element are co-deployed as a remote attestation service entity, or a UDM network element and the TPMF network element are co-deployed. This is not particularly limited in this application. For example, in the foregoing descriptions, when the two network elements that are originally independently deployed change to network elements that are co-deployed, an interaction procedure between the two network elements that are originally independently deployed may be ignored, and a function implemented by the interaction procedure between the two network elements is implemented by the network elements that are co-deployed.

In FIG. 2A, N1, N2, N3, N4, N6, and the like are interface sequence numbers.

It should be understood that the network architecture applied to embodiments of this application is merely an example of a network architecture described from a perspective of a service-based architecture, and a network architecture applicable to embodiments of this application is not limited thereto. Embodiments of this application are applicable to any network architecture that can implement functions of the foregoing network elements.

For example, in some network architectures, network function entities such as the AMF, the SMF, the PCF, the UPF, and the UDM are all referred to as NF network elements. Alternatively, in some other network architectures, a set of network elements such as the AMF, the SMF, the PCF, the UPF, and the UDM may be referred to as a control plane function (Control Plane Function, CPF) network element.

In this application, the proposed attestation network element may communicate with another network element. For example, the attestation network element may communicate with network elements such as the RAN, the AMF network element, the SMF network element, and the UDM network element.

The following uses network elements in a 5G system as an example to describe specific solution details. It may be understood that, when the solution is applied to an LTE system or a future communication system, each network element in the solution may be replaced with another network element having a corresponding function. This is not limited in this application.

A network side determines security of a UE side based on a SIM card. Basic security logic is that the SIM card and the network side jointly hold a shared key, and a user performs an operation on the shared key in a network access process, to perform authentication and authorization.

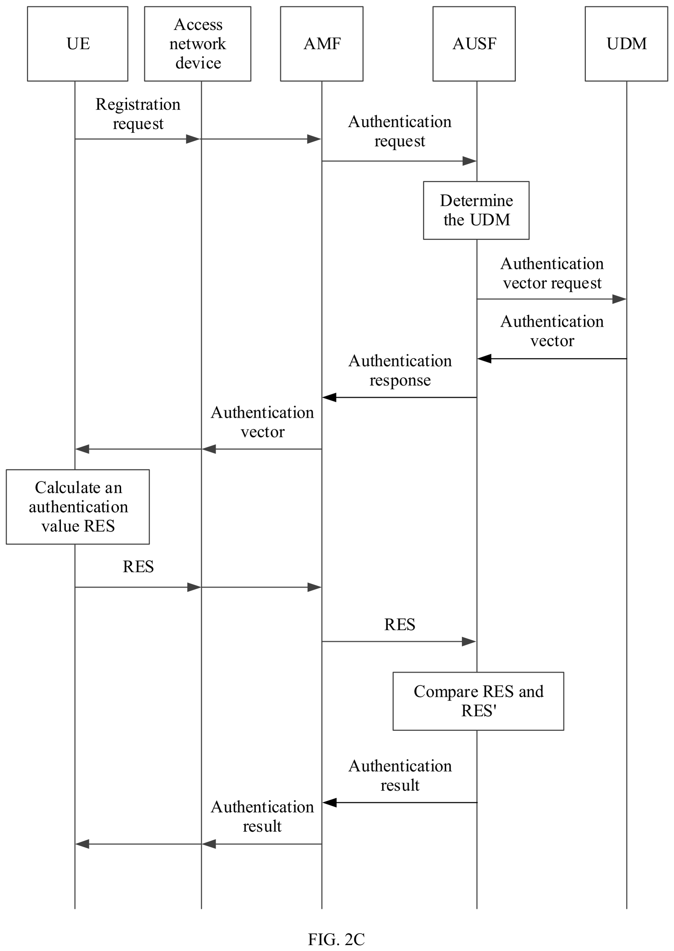

FIG. 2C is a diagram of an authentication procedure according to an embodiment of this application. A specific authentication process includes the following steps.
(1) UE sends a registration request to an AMF by using an access network device. The registration request includes identification information of the UE. The AMF may alternatively be co-deployed with an SEAF. For example, the UE includes mobile equipment (Mobile Equipment, ME) and a universal subscriber identity module (UMTS subscriber identity module, USIM) card. The USIM card is one type of SIM card. UMTS is short for universal mobile telecommunications system (Universal Mobile Telecommunications System).

The SIM card in this embodiment of this application includes a SIM card for which only a network performs identity authentication on the SIM card, a USIM card using a bidirectional authentication mechanism, an eSIM (embedded SIM) card, or a soft (soft) SIM card. The bidirectional authentication mechanism means that when the UE accesses the network, not only the network performs identity authentication on the USIM card, but also the USIM card performs identity authentication on the network. The first two SIM cards are physical cards, and are inserted into a card slot of a terminal when being used.

The eSIM card is an electronic SIM card, and is downloaded and installed on the terminal over a network. Different from a conventional physical SIM card, a design idea of a conventional removable SIM card is abandoned for the eSIM card. Instead, the SIM card is directly embedded into a device as a part, so that the eSIM card can replace the physical SIM card.

The soft SIM card simply simulates the SIM card by using software, instead of using an actual physical SIM card. After the software modifies a baseband, the baseband is redirected to directly interact with an operating system layer.

Authentication processes of the foregoing types of SIM cards are the same. In this embodiment of this application, the USIM card is used as an example for description.

(2) The AMF initiates an authentication request to an AUSF based on the registration request. The authentication request includes the identification information of the UE.

(3) The AUSF determines a UDM that processes an authentication request of the UE, obtains authentication data of the UE, namely, an authentication vector (authentication vector, AV) from the UDM, and sends the AV to the AMF. The AV is a parameter group used for authentication, and the parameter group includes four parameters:

RAND (RandomChallenge, random number): RAND is an unpredictable random number provided by the network to the UE.

AUTN (AuthenticationToken, authentication token): A role of the AUTN is to provide information to the UE, so that the UE can use the information to authenticate the network.

XRES (ExpectedResponse, expected response): "X" in XRES is Expected, indicating "expected". XRES is an expected UE authentication response parameter, and may also be understood as an expected authentication value RES'. RES' is compared with RES (or RES+RES_EXT) generated by the UE, to determine whether authentication succeeds.

KASME: KASME is a root key derived based on CK/IK and a public land mobile network ID (Public Land Mobile Network ID, PLMNID) of an access security management entity (Access Security Management entity, ASME). An encryption key CK and an integrity protection key IK are derived based on an authentication root key K.

Specifically, after determining a UDM, the AUSF sends an authentication vector request to the UDM. The authentication vector request includes the identification information of the UE. The UDM obtains the authentication vector of the UE based on the identification information of the UE, and the UDM sends the authentication vector to the AUSF. The AUSF returns the authentication vector to the AMF in an authentication response.

(4) The AMF sends the authentication vector to the access network device, and the access network device transparently transmits the authentication vector to the UE.

(5) After receiving the authentication vector, the SIM card verifies validity of a core network authentication message based on a parameter in the authentication vector, calculates an authentication value RES, and sends RES to the ME.

(6) The ME returns RES to the AMF by using the access network device, and the AMF transfers RES to the AUSF. If 5G AKA is used, the AMF further needs to verify RES, obtain a verification result of the UE from a perspective of a service network, and send the verification result to the AUSF.

(7) The AUSF verifies RES, and obtains an authentication result of the UE from a perspective of a home network. Specifically, RES is compared with RES', and authentication succeeds if RES and RES' are the same; or authentication fails if RES and RES' are different.

(8) The AUSF returns the authentication result of the UE to the AMF. The AMF sends the authentication result of the UE to the access network device, and the access network device transparently transmits the authentication result to the UE.

After the network side and the UE side complete two-way authentication, key derivation is performed based on a key.

It can be learned from the foregoing authentication process that end-to-end security verification between the network side and the UE side is verification from a network end to a SIM card end, but trustworthiness of a hardware device of the UE is not determined.

Therefore, an embodiment of this application provides a trusted attestation method, to perform trusted attestation on a terminal.

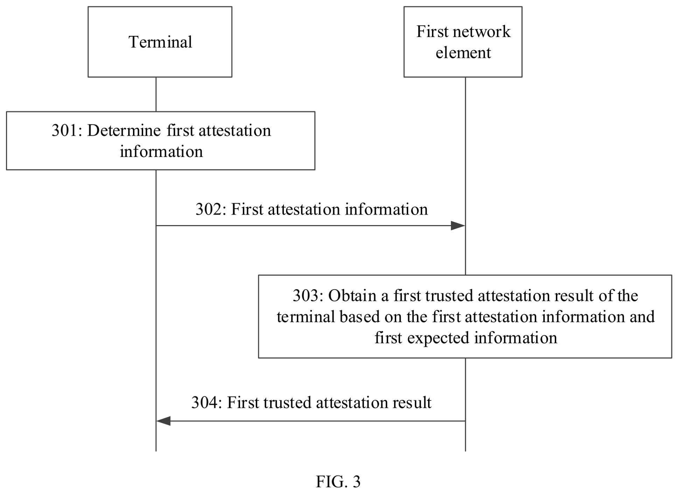

FIG. 3 is a flowchart of an attestation method according to an embodiment of this application. In this embodiment, the attestation method includes the following steps.

301: A terminal determines first attestation information.

302: The terminal sends the first attestation information to a first network element.

Correspondingly, the first network element receives the first attestation information from the terminal.

303: The first network element obtains a first trusted attestation result of the terminal based on the first attestation information and first expected information.

Specifically, the first trusted attestation result indicates that the terminal is trustworthy or untrustworthy.

In this embodiment, the first network element may determine the first trusted attestation result of the terminal based on the first attestation information of the terminal and the first expected information, to implement trusted attestation of the terminal, that is, determine whether the terminal is trustworthy.

In a possible embodiment, as shown in FIG. 3, the attestation method further includes:
304: The first network element sends the first trusted attestation result to the terminal.

It can be learned that, in this embodiment, the first network element feeds back a trusted attestation result of the terminal to the terminal, so that the terminal obtains the trusted attestation result of the terminal.

In a possible embodiment, the first attestation information in step 301 includes a first check value, the first check value is obtained by processing a first random number and local attestation information by using a symmetric key, and the symmetric key is a key used for trusted attestation. The symmetric key means that the terminal and the first network element have a same key used for trusted attestation. The first network element or a third network element generates one first random number for each time of trusted attestation of the terminal, and provides the first random number to the terminal. For a manner in which the terminal obtains the first random number, refer to related descriptions of step C403, step C404, and step C405. Details are not described herein again.

The local attestation information is information that needs to be attested in the terminal. For example, the local attestation information includes a quota (quota) and/or an attestation log (event log). The attestation log is attestation process information of a trusted computing platform supported by the terminal. The quota includes a digest of the attestation log, and the digest of the attestation log is obtained by performing hash calculation on the attestation log.

The first expected information includes a first expected check value, and the first expected check value is obtained by processing the first random number and first expected attestation information by using the symmetric key. The first network element generates one first random number for each time of trusted attestation of the terminal, or the third network element generates one first random number for each time of trusted attestation of the terminal, and provides the first random number to the first network element. The first expected attestation information is a reference value of the local attestation information of the terminal. The first network element obtains the corresponding first expected attestation information based on identification information of the terminal. For a specific process, refer to related descriptions of step C403, step C404, and step C405. In step 303, the first network element learns, through comparison, of whether the first expected check value is the same as the first check value, and when it is learned, through comparison, that the first expected check value is the same as the first check value, the first trusted attestation result of the terminal is that the terminal is trustworthy; or when it is learned, through comparison, that the first expected check value is different from the first check value, the first trusted attestation result of the terminal is that the terminal is untrustworthy.

In a possible embodiment, the first attestation information in step 301 further includes the local attestation information of the terminal. The first expected information further includes the first expected attestation information. For example, in step 303, the first network element learns, through comparison, of whether the first expected attestation information is the same as the local attestation information, and learns, through comparison, of whether the first expected check value is the same as the first check value. When it is learned, through comparison, that the first expected attestation information is the same as the local attestation information, and the first expected check value is the same as the first check value, the first trusted attestation result of the terminal is that the terminal is trustworthy; or when it is learned, through comparison, that the first expected attestation information is different from the local attestation information, and/or the first expected check value is different from the first check value, the first trusted attestation result of the terminal is that the terminal is untrustworthy. In this application, trusted verification is performed by verifying whether the two groups of parameters, namely, the first check value and the first expected check value, and the local attestation information and the first expected attestation information each are the same, to ensure higher reliability of the trusted attestation result of the terminal.

For example, the first attestation information may further include the first random number, to indicate that the first check value corresponds to the first random number. In other words, the first check value is generated based on the first random number. Similarly, the first expected information may further include the first random number, to indicate that the first expected check value corresponds to the first random number. In other words, the first expected check value is generated based on the first random number. In step 303, the first network element further learns, through comparison, of whether the first random number in the first attestation information is the same as the first random number in the first expected information. When it is learned, through comparison, that the first expected attestation information is the same as the local attestation information, the first expected check value is the same as the first check value, and the first random number in the first attestation information is the same as the first random number in the first expected information, the first trusted attestation result of the terminal is that the terminal is trustworthy; or when it is learned, through comparison, that the first expected attestation information is different from the local attestation information, and/or the first expected check value is different from the first check value, and/or the first random number in the first attestation information is different from the first random number in the first expected information, the first trusted attestation result of the terminal is that the terminal is untrustworthy. In this application, trusted verification is performed by verifying whether the three groups of parameters, namely, the first check value and the first expected check value, the local attestation information and the first expected attestation information, and the first random number in the first attestation information and the first random number in the first expected information each are the same, to further improve reliability of the trusted attestation result of the terminal.

In a possible embodiment, the first attestation information may further include a sequence number corresponding to the first attestation information, and the sequence number identifies the first attestation information. For example, the sequence number may alternatively be set at a same level as the first attestation information. For example, the terminal sends an attestation response message to the first network element. The attestation response message includes the first attestation information and the sequence number.

In a possible embodiment, the symmetric key is any one of the following:
Root key used for trusted attestation: To be specific, the terminal is preconfigured with a root key specially used for trusted attestation, and securely shares the root key with a network side (for example, the first network element), so that the first network element and the terminal perform trusted attestation based on the root key.

First derived key: The first derived key is derived from the root key used for trusted attestation. To be specific, the terminal is preconfigured with a root key specially used for trusted attestation, and securely shares the root key with the network side. The terminal and the network side derive the first derived key based on a same derivation algorithm, so that the first network element and the terminal perform trusted attestation based on the first derived key.

Second derived key: The second derived key is derived from a root key used for authentication. To be specific, the terminal is preconfigured with the root key specially used for authentication, and securely shares the root key with the network side. The terminal and the network side derive the second derived key based on a same derivation algorithm, so that the first network element and the terminal perform trusted attestation based on the second derived key.

Third derived key: The third derived key is derived from an authentication key. The terminal and the network side derive the third derived key based on a same derivation algorithm and the authentication key. The first network element and the terminal perform trusted attestation based on the third derived key.

In a possible embodiment, the attestation method further includes:
The first network element performs key derivation based on the symmetric key, to obtain a fourth derived key, where the fourth derived key is either of the following: a first anchor key and the authentication key.

In this embodiment, the first network element may continue to perform key derivation based on the symmetric key. For example, the first network element sends a first anchor key to the second network element. For another example, the first network element sends the authentication key to an authentication network element.

The following specifically describes an attestation method in an embodiment of this application by using an example in which a symmetric key is a first derived key.

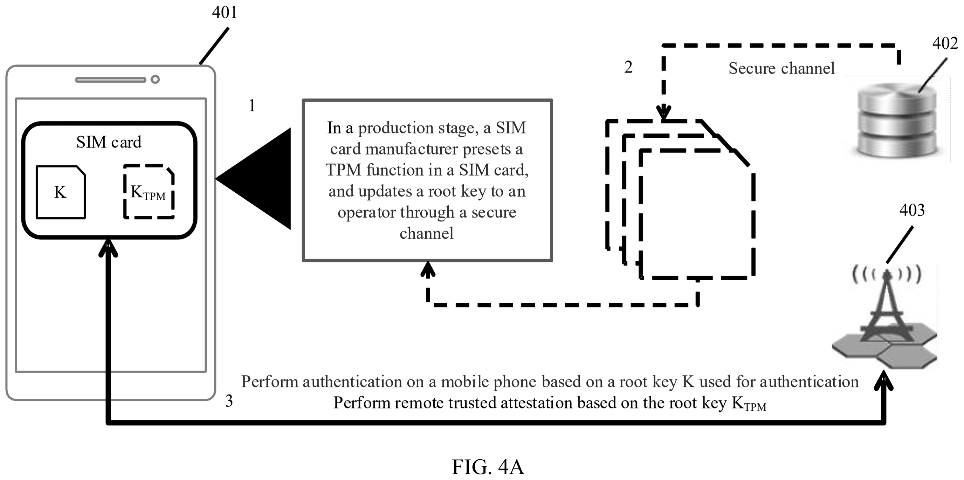

FIG. 4A is a diagram of a trusted attestation procedure according to an embodiment of this application. In this embodiment, an example in which UE is a mobile phone 401 is used, and an example in which a trusted attestation technology is a TPM is used. The mobile phone 401 includes a SIM card. The SIM card in this embodiment of this application includes a SIM card for which only a network performs identity authentication on the SIM card, a USIM card, an eSIM card, or a soft SIM card. A root key K used for authentication and a root key K_{TPM} used for trusted attestation are preset in the SIM card. In a production stage, a SIM card manufacturer presets a TPM function in the SIM card, and updates the root key K_{TPM} in the SIM card to a resource server 402 of an operator through a secure channel. In this way, in a subsequent process of using the mobile phone 401, remote trusted attestation may be performed between an operator network 403 and the mobile phone 401 based on the root key K_{TPM}. Specifically, the operator network 403 performs key derivation based on the root key K_{TPM} in the resource server 402, and the mobile phone 401 performs key derivation based on the root key K_{TPM} in the mobile phone 401.

In addition, the root key K in the SIM card is further updated to the resource server 402 of the operator through the secure channel. In this way, the operator network 403 may perform authentication on the mobile phone based on the root key K used for authentication. In this embodiment, for a specific process of performing authentication on the mobile phone, refer to the descriptions in FIG. 2C. Details are not described herein again.

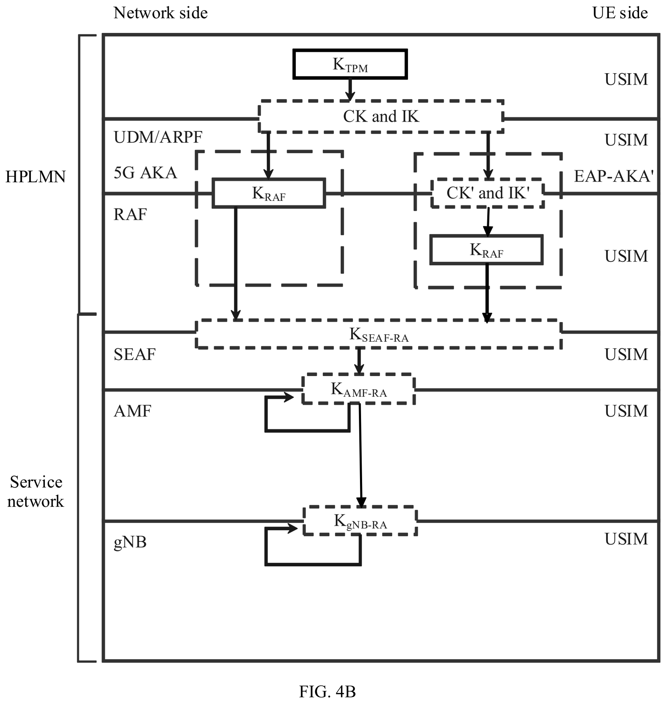

FIG. 4B is a diagram of a key architecture according to an embodiment of this application. Both a network side and a UE side perform key derivation based on the key architecture in FIG. 4B. A local public land mobile network is a home public land mobile network, which is HPLMN for short. For example, on the network side, a key K_{RAF} is a key to be used by an RAF network element, a key K_{SEAF} is a key to be used by an SEAF network element, the key K_{SEAF} is an anchor key, a key K_{AMF-RA} is a key to be used by an AMF network element, and a key K_{gNB-RA} is a key to be used by an access network device.

The following describes a trusted attestation process of UE in FIG. 4A.

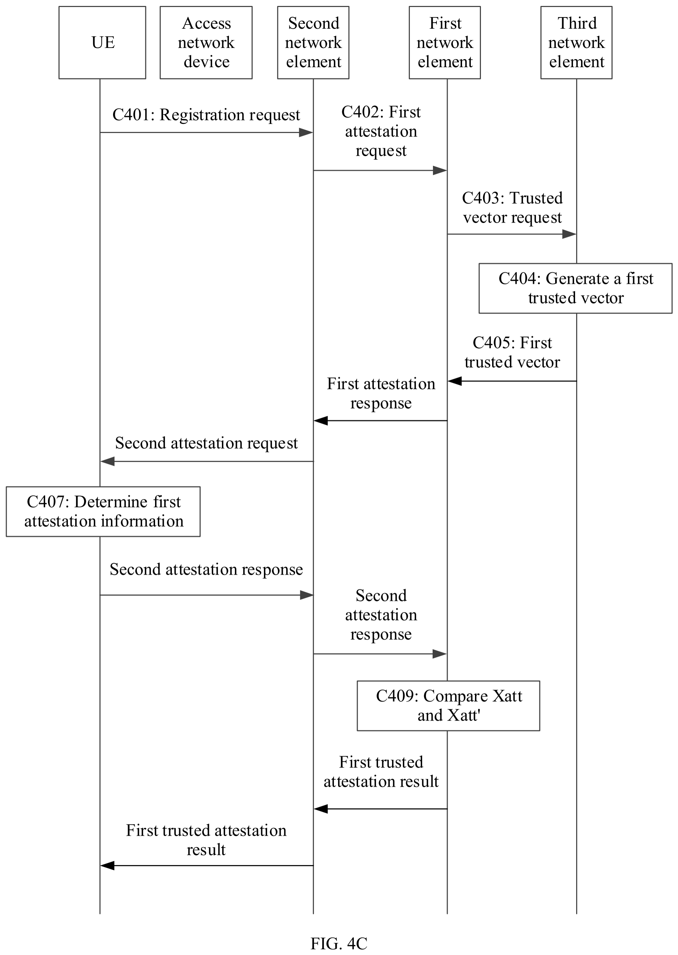

FIG. 4C is an interaction flowchart of an attestation method according to an embodiment of this application. The attestation method includes the following steps.

C401: UE sends a registration request to a second network element, where the registration request includes identification information of the UE.

Specifically, in this embodiment, the second network element may be an AMF, or the second network element is a network element in which the AMF and an SEAF are co-deployed. For example, the registration request further includes a trusted attestation technology (namely, a type of trusted attestation, namely, the foregoing type of trusted computing) supported by the UE. For another example, the registration request further includes an operating system version and/or an application (application, APP) version of the UE. For example, a TPMF network element may obtain a reference value of local attestation information of the UE, namely, first expected attestation information, based on the identification information of the UE and the operating system version and/or the app version of the UE. For example, as shown in FIG. 2B, the TPMF network element obtains the first expected attestation information of the UE from a reference value providing entity based on the identification information of the UE and the operating system version and/or the app version of the UE.

Further, the UE may send the registration request to the second network element by using an access network device.

The identification information of the UE includes any one of the following: subscription permanent identifier (subscription permanent identifier, SUPI) information, subscription concealed identifier (subscription concealed identifier, SUCI) information, international mobile subscriber identity (international mobile subscriber identity, IMSI) information, permanent equipment identifier (permanent equipment identifier, PEI) information, international mobile equipment identity (international mobile equipment identity, IMEI) information, generic public subscription identifier (generic public subscription identifier, GPSI) information, and mobile subscriber international ISDN number (mobile subscriber international ISDN number, MSISDN) information.

C402: The second network element sends a first attestation request to a first network element, where the first attestation request includes the identification information of the UE.

Correspondingly, the first network element receives the first attestation request from the second network element.

Specifically, the first attestation request is used to trigger the first network element to perform trusted attestation on the UE. In this embodiment, the first network element may be an RAF network element. The first network element obtains a first trusted vector based on the identification information of the UE. For a manner in which the first network element obtains the first trusted vector, refer to step C403, step C404, and step C405.

C403: The first network element sends a trusted vector request to a third network element, where the request includes the identification information of the UE.

Specifically, in this embodiment, the third network element may be a TPMF network element. Optionally, a UDM network element and the TPMF network element are co-deployed. Optionally, the TPMF network element and the RAF network element are co-deployed.

C404: The third network element generates the first trusted vector.

Specifically, if the identification information of the UE is an SUCI, the third network element decrypts the SUCI to obtain an SUPI, and obtains, through query based on the SUPI, the first expected attestation information evidence' and a symmetric key K_{RAF} that correspond to the UE. The symmetric key K_{RAF} is derived by the third network element based on a root key K_{TPM}. The third network element processes the first expected attestation information evidence' and a first random number nonce by using the symmetric key K_{RAF}, to generate a first expected check value HMAC'. For example, the first trusted vector includes first expected information, and the first expected information includes the first expected check value HMAC'. For another example, the first expected information further includes the first expected attestation information evidence'. Optionally, the first expected information further includes the first random number nonce. For example, the first expected information Xatt' is a combination value of the first random number nonce, the first expected attestation information evidence', and the first expected check value HMAC', and Xatt' may be obtained through splicing in a sequence of the first random number nonce, the first expected attestation information evidence', and the first expected check value HMAC'. For example, the first trusted vector further includes the symmetric key K_{RAF}.

If the identification information of the UE is not an SUCI, the third network element processes the identification information of the UE based on a processing procedure of the SUPI, and also generates the first trusted vector.

The first random number nonce may be a random number that is generated by the third network element and that corresponds to the identification information of the UE. In other words, the third network element generates one first random number for each time of trusted attestation of the UE. The third network element may send the first random number to the UE by using the first network element, that is, in a unicast manner. Specifically, the third network element may use the first trusted vector to carry the first random number, and when sending a second attestation request to the UE, the first network element uses the second attestation request to carry the first random number. For another example, the third network element may alternatively broadcast the first random number nonce to a plurality of UEs. The plurality of UEs are two or more UEs, and the plurality of UEs include the UE in this embodiment.

For example, the first expected check value HMAC is generated by processing the first expected attestation information evidence' and the first random number nonce by using an HMAC algorithm and the symmetric key K_{RAF}. The HMAC algorithm is a method for constructing a message authentication code by using a one-way hash function. H in HMAC means hash. The one-way hash function used in HMAC is not limited to one type. Any high-strength one-way hash function can be used in HMAC. If a new one-way hash function is designed in the future, the new one-way hash function can also be used. The one-way hash function may be MD5 (Message Digest Algorithm 5), SHA (Secure Hash Algorithm)-1, SHA-256, or SHA-384. MD5 is used to perform a cryptographic operation on data blocks with different lengths, to obtain a 128-bit value. SHA-1 may perform an operation on data of any length, to generate a 160-bit value.

C405: The third network element sends the first trusted vector to the first network element.

Another manner in which the first network element obtains the first trusted vector is: The first network element performs step C403, step C404, and step C405. A difference is that in step C404, the first trusted vector generated by the third network element includes the symmetric key K_{RAF}, the first random number nonce, and the first expected attestation information evidence'. In this way, the first network element processes the first expected attestation information evidence' and the first random number nonce by using the symmetric key K_{RAF}, to generate the first expected check value HMAC'. Alternatively, the first trusted vector generated by the third network element includes the symmetric key K_{RAF} and the first expected attestation information evidence', and the first network element processes the first expected attestation information evidence' and the first random number nonce by using the symmetric key K_{RAF}, to generate the first expected check value HMAC'. In this case, the first random number nonce used by the first network element may be a random number that is generated by the first network element and that corresponds to the identification information of the UE. In other words, the first network element generates one first random number for each time of trusted attestation of the UE. Similarly, the first network element may send the first random number to the UE in a unicast or broadcast manner. When the unicast manner is used, when sending the second attestation request to the UE, the first network element may use the second attestation request to carry the first random number. When the broadcast manner is used, the third network element may broadcast the first random number nonce to a plurality of UEs. The plurality of UEs are two or more UEs, and the plurality of UEs include the UE in this embodiment.

In this case, similarly, the first expected information includes the first expected check value HMAC'. For example, the first expected information further includes the first expected attestation information evidence'. Optionally, the first expected information further includes the first random number nonce.

C406: The first network element sends the second attestation request to the UE.

The second attestation request is used to trigger the UE to generate the first attestation information. Optionally, when the first network element or the third network element provides the first random number to the UE in the unicast manner, the second attestation request includes the first random number. In the embodiment shown in FIG. 4C, the first network element sends the second attestation request to the UE by using the second network element. Specifically, the first network element sends a first attestation response to the second network element. The first attestation response carries the first random number nonce. The second network element sends the second attestation request to the UE. The request carries the first random number nonce. Specifically, the first attestation response sent by the first network element triggers the second network element to send the second attestation request to the UE.

When the first network element or the third network element provides the first random number to the UE in the broadcast manner, the second attestation request does not need to carry the first random number, and the second attestation request only needs to trigger the UE to generate the first attestation information. In this case, the first network element sends the second attestation request to the UE by using the second network element.

C407: The UE determines the first attestation information.

Specifically, in this embodiment, the UE processes the first random number nonce and the local attestation information evidence by using the symmetric key K_{RAF}, to generate the first check value HMAC. The first attestation information includes a first check value HMAC. For example, the first attestation information further includes the local attestation information evidence. For example, the first attestation information Xatt is a combination value of the local attestation information evidence and the first check value HMAC, and Xatt may be obtained through splicing in a sequence of the local attestation information evidence and the first check value HMAC. Optionally, the first attestation information further includes the first random number nonce. For example, the first attestation information Xatt is a combination value of the first random number nonce, the local attestation information evidence, and the first check value HMAC, and Xatt may be obtained through splicing in a sequence of the first random number nonce, the local attestation information evidence, and the first check value HMAC.

C408: The UE sends the first attestation information to the first network element.

For example, the first expected information further includes the first random number nonce. When the first random number nonce is a random number that is generated by the third network element and that corresponds to the identification information of the UE, the UE sends a second attestation response to the second network element. The second network element sends the second attestation response to the first network element.

Specifically, the second attestation response includes the first attestation information Xatt. Optionally, the second attestation response may further include the first random number nonce and/or the local attestation information evidence.

For another example, when the first random number nonce is a common random number that is broadcast by the first network element to a plurality of UEs in advance, the UE sends the first attestation information Xatt to the first network element by using the second network element. Optionally, when sending the first attestation information Xatt, the UE further carries the first random number nonce and/or the local attestation information evidence.

C409: The first network element compares Xatt and Xatt', and generates a first trusted attestation result. If Xatt and Xatt' are consistent, the attestation result is that the UE is trustworthy; or if Xatt and Xatt' are inconsistent, the attestation result is that the UE is untrustworthy.

For example, the first attestation information Xatt is the combination value of the first random number nonce, the local attestation information evidence, and the first check value HMAC. When comparing Xatt and Xatt', the first network element may separately extract the first random number nonce, the local attestation information evidence, and the first check value HMAC in Xatt, and the first random number nonce, the first expected attestation information evidence', and the first expected check value HMAC' in Xatt'; learn, through comparison, of whether the first random number nonce in Xatt is the same as the first random number nonce in Xatt'; learn, through comparison, of whether the local attestation information evidence is the same as the first expected attestation information evidence'; and learn, through comparison, of whether the first check value HMAC is the same as the first expected check value HMAC'. When comparison results of the three items are all "same", it indicates that Xatt and Xatt' are consistent; or when comparison results of the three items are not all "same", Xatt and Xatt' are inconsistent.

For another example, when the first trusted vector further includes the symmetric key K_{RAF}, the symmetric key K_{RAF} may be used to process the first random number nonce and the first expected attestation information evidence' to generate a check value, and the first check value HMAC is verified based on the generated check value.

C410: The first network element returns the first trusted attestation result to the second network element, and then the second network element returns the first trusted attestation result to the UE.

When the attestation result indicates that the UE is trustworthy, a UE side and a network side may continue to perform key derivation based on the symmetric key K_{RAF}. As shown in FIG. 4B, an anchor key K_{SEAF-RA} may continue to be derived from the symmetric key K_{RAF}, a key K_{AMF-RA} to be used by the AMF may continue to be derived from the anchor key K_{SEAF-RA}, and a key K_{gNB-RA} to be used by the access network device (namely, a gNB) may continue to be derived from the key K_{AMF-RA}.

For example, when the first random number nonce is a common random number that is broadcast by the first network element to a plurality of UEs in advance, the UE may directly report the first attestation information to the first network element, and the first network element does not need to send the second attestation request to the UE. For example, the UE may periodically report the first attestation information to the first network element, or the UE reports the first attestation information to the first network element based on another policy. The another policy is, for example, reporting the first attestation information to the first network element each time the UE is powered on or after the UE requests a service. For another example, when the UE directly reports the first attestation information to the first network element, the first network element may perform trusted attestation based on the first attestation information and the first expected information. Alternatively, before the first network element performs trusted attestation based on the first attestation information and the first expected information, if the first network element receives the first attestation request of the second network element, where the first attestation request includes the identification information of the UE, the first attestation request is used to trigger the first network element to start trusted attestation of the UE. In other words, the first network element performs trusted attestation based on the first attestation information and the first expected information only after receiving the first attestation request.

The following specifically describes an attestation method in an embodiment of this application by using an example in which a symmetric key is a second derived key.

Different from FIG. 4A, in this embodiment, a SIM chip in UE is not preconfigured with a root key K_{TPM} used for trusted attestation. However, a SIM card is still preconfigured with a root key K used for authentication. In addition, the root key in the SIM card is further updated to a resource server of an operator through a secure channel. In this way, an operator network may perform authentication on a mobile phone based on the root key K used for authentication. In this embodiment, an authentication key K_{AUSF} to be used by an authentication network element and a symmetric key K_{RAF} to be used by a first network element are derived based on the root key K.

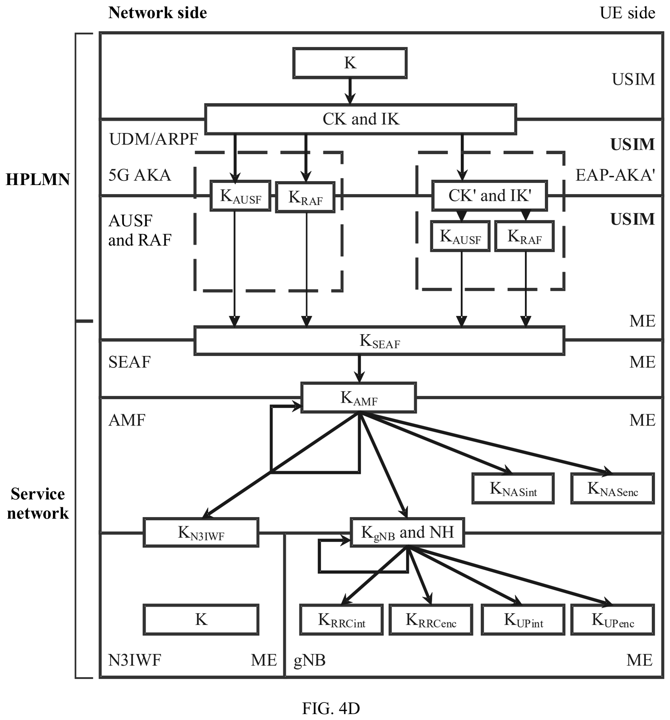

FIG. 4D is a diagram of another key architecture according to an embodiment of this application. Both a network side and a UE side perform key derivation based on the key architecture in FIG. 4D.

The following describes a trusted attestation process of UE.

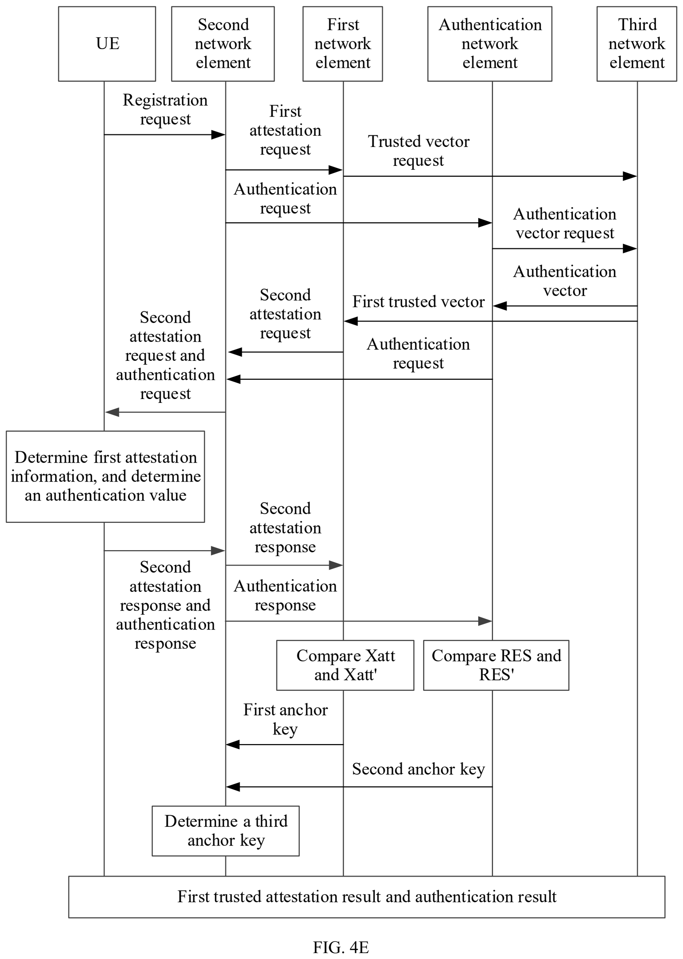

FIG. 4E is an interaction flowchart of another attestation method according to an embodiment of this application. The attestation method includes the following steps.

E401: UE sends a registration request to a second network element, where the request includes identification information of the UE.

Specifically, trusted capability negotiation is performed between the UE and a network. The second network element may be an AMF network element, or the second network element is a network element in which the AMF and an SEAF are co-deployed. For specific descriptions of step E401, refer to related descriptions of step C401. Details are not described herein again.

E402: The second network element sends a first attestation request to a first network element, where the request includes the identification information of the UE.

Specifically, the first network element obtains a corresponding first trusted vector based on the identification information of the UE. For a specific process in which the first network element obtains the corresponding first trusted vector based on the identification information of the UE, refer to related descriptions corresponding to FIG. 4C. At least two obtaining methods are included. In addition, the second network element sends an authentication request to an authentication network element, and the authentication network element sends an authentication vector request to a third network element. A sequence of sending the first attestation request and the authentication request is not particularly limited.

In this embodiment, for a specific process of performing authentication on the UE, refer to the descriptions in FIG. 2C. Details are not described herein again.

In this embodiment, the first network element may be an RAF network element. The third network element may be a TPMF network element. Optionally, a UDM network element and the TPMF network element are co-deployed. Optionally, the TPMF network element and the RAF network element are co-deployed.

E403: The first network element sends a trusted vector request to the third network element, where the request includes the identification information of the UE. The authentication network element sends the authentication vector request to the third network element.

Similarly, a sequence of sending the trusted vector request and the authentication vector request is not particularly limited.

E404: The third network element generates the first trusted vector. The third network element generates an authentication vector.

For specific descriptions of step E404, refer to related descriptions of step C404. Details are not described herein again. A symmetric key K_{RAF} is derived by the third network element based on a root key K used for authentication.

E405: The third network element sends the first trusted vector to the first network element, and the third network element sends the authentication vector to the authentication network element.

E406: The first network element sends a second attestation request to the UE, and the authentication network element sends an authentication request to the UE.

Specifically, for a specific process in which the first network element sends the second attestation request to the UE, refer to related descriptions of step C406. Details are not described herein again. The authentication request includes the authentication vector.

For example, when the second network element sends the second attestation request and the authentication request to the UE, the second attestation request and the authentication request may be classified into two requests, and the two requests are separately sent. Alternatively, the authentication request may be reused, and the second attestation request is carried in the authentication request. Optionally, the authentication request may carry information carried in the second attestation request, for example, a first random number.

E407: The UE determines first attestation information, and determines an authentication value.

For specific descriptions of step E407, refer to related descriptions of step C407. Details are not described herein again.

E408: The UE sends the first attestation information and the authentication value to the first network element.

For specific descriptions of sending the first attestation information in step E408, refer to related descriptions of step C408. Details are not described herein again. For example, when the UE sends the authentication value to the first network element, specifically, the UE sends an authentication response to the second network element. The authentication response includes the authentication value. The second network element forwards the authentication response to the first network element.

E409: The first network element compares Xatt and Xatt', and generates a first trusted attestation result. The authentication network element compares RES and RES', and generates an authentication result.

Specifically, for specific descriptions that the first network element compares Xatt and Xatt', and generates the first trusted attestation result, refer to related descriptions of step C409. Details are not described herein again.

The first network element derives a first anchor key based on the symmetric key K_{RAF}, and sends the first anchor key to the second network element. The authentication network element derives a second anchor key based on an authentication key K_{AUSF}, and sends the second anchor key to the second network element. In addition, the second network element determines a third anchor key, and the third anchor key is used as an anchor obtained through subsequent key derivation. Optionally, the second network element may use the first anchor key as the third anchor key. Optionally, the second network element may obtain the third anchor key based on the first anchor key and the second anchor key. For example, the third anchor key is obtained through splicing based on the first anchor key and the second anchor key. Alternatively, a part is intercepted as the third anchor key after splicing is performed based on the first anchor key and the second anchor key. Alternatively, the third anchor key is obtained by performing an exclusive OR operation based on the first anchor key and the second anchor key.

The following specifically describes an attestation method in an embodiment of this application by using an example in which a symmetric key is a third derived key.

Different from FIG. 4A, in this embodiment, a SIM chip in UE is not preconfigured with a root key K_{TPM} used for trusted attestation. However, a SIM card is still preconfigured with a root key K used for authentication. In addition, the root key in the SIM card is further updated to a resource server of an operator through a secure channel. In this way, an operator network may perform authentication on a mobile phone based on the root key K used for authentication. In this embodiment, an authentication key K_{AUSF} to be used by an authentication network element is derived based on the root key K, and after authentication on the UE succeeds, a symmetric key K_{RAF} to be used by a first network element is derived based on the authentication key K_{AUSF}.

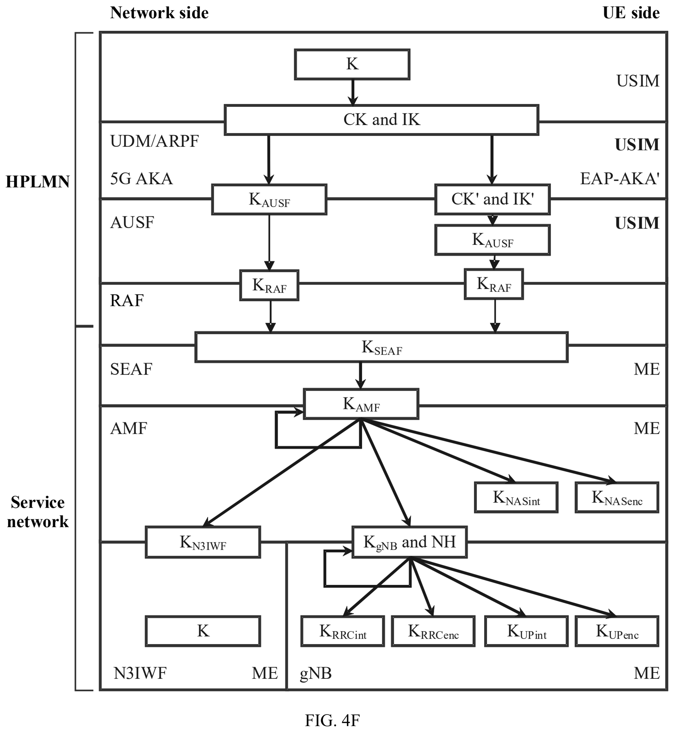

FIG. 4F is a diagram of another key architecture according to an embodiment of this application. Both a network side and a UE side perform key derivation based on the key architecture in FIG. 4F.

The following describes a trusted attestation process of UE.

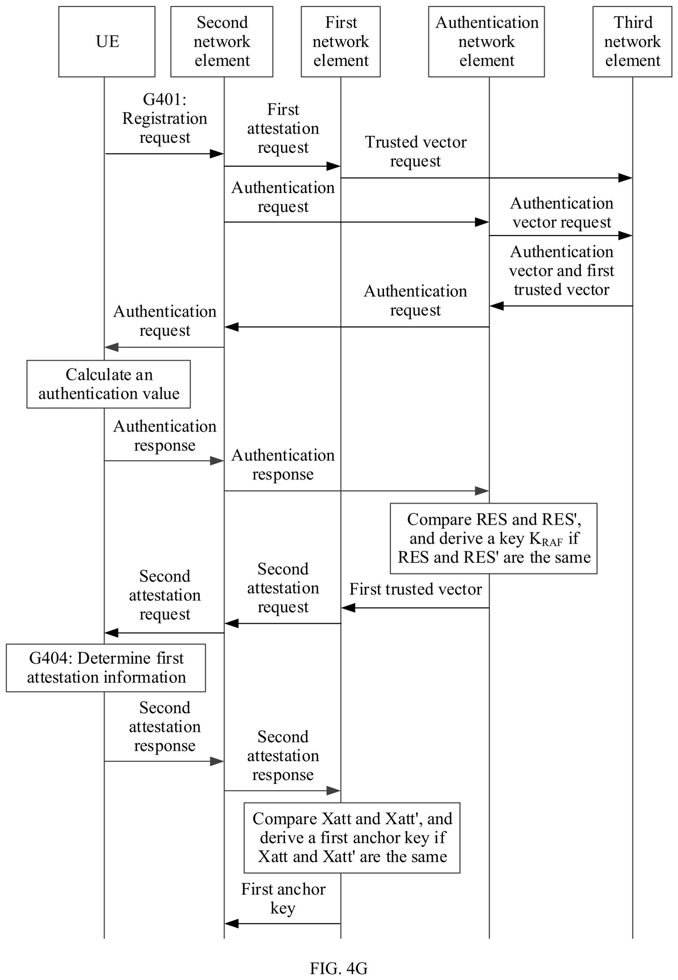

FIG. 4G is an interaction flowchart of another attestation method according to an embodiment of this application. The attestation method includes the following steps.

G401: UE sends a registration request to a second network element, where the request includes identification information of the UE.

Specifically, trusted capability negotiation is performed between the UE and a network. In this embodiment, the second network element may be an AMF network element, or the second network element is a network element in which the AMF and an SEAF are co-deployed. For specific descriptions of step G401, refer to related descriptions of step C401. Details are not described herein again.

G402: The second network element sends a first attestation request to a first network element, where the request includes the identification information of the UE.

Specifically, the second network element sends an authentication request to an authentication network element, and the authentication network element sends an authentication vector request to a third network element. A sequence of sending the first attestation request and the authentication request is not particularly limited.

In this embodiment, for a specific process of performing authentication on the UE, refer to the descriptions in FIG. 2C. Details are not described herein again. Until the authentication network element compares RES and RES', when it is learned, through comparison, that RES and RES' are the same, the authentication network element derives a symmetric key K_{RAF} based on an authentication key K_{AUSF}.

The first network element obtains a corresponding first trusted vector based on the identification information of the UE. For a specific process in which the first network element obtains the corresponding first trusted vector based on the identification information of the UE, refer to related descriptions corresponding to FIG. 4C. At least two obtaining methods are included. A difference is that the third network element sends the generated first trusted vector to the authentication network element, and after authentication on the UE succeeds, the authentication network element sends the first trusted vector to the first network element. Optionally, in this case, the first trusted vector sent to the first network element may include the symmetric key K_{RAF}.

G403: The first network element sends a second attestation request to the UE.

For specific descriptions of step G403, refer to related descriptions of step C406. Details are not described herein again.

G404: The UE determines first attestation information.

For specific descriptions of step G404, refer to related descriptions of step C407. Details are not described herein again.

G405: The UE sends the first attestation information to the first network element.

For specific descriptions of step G405, refer to related descriptions of step C408. Details are not described herein again.

G406: The first network element compares Xatt and Xatt', and generates a first trusted attestation result.

Specifically, for specific descriptions that the first network element compares Xatt and Xatt', and generates the first trusted attestation result, refer to related descriptions of step C409. Details are not described herein again.

If Xatt and Xatt' are the same, that is, the first trusted attestation result indicates that the UE is trustworthy, the first network element derives a first anchor key based on the symmetric key K_{RAF}, and the first network element sends the first anchor key to the second network element. In addition, the second network element determines a third anchor key. Optionally, the second network element determines the first anchor key as the third anchor key.

The following specifically describes key derivation of a symmetric key by using an example in which a fourth derived key is an authentication key.

Different from FIG. 4A, in this embodiment, a SIM chip in UE is not preconfigured with a root key K_{TPM} used for trusted attestation. However, a SIM card is still preconfigured with a root key K used for authentication. In addition, the root key in the SIM card is further updated to a resource server of an operator through a secure channel. In this embodiment, a symmetric key K_{RAF} to be used by a first network element is derived based on the root key K, and after trusted attestation of the UE succeeds, an authentication key K_{AUSF} to be used by an authentication network element is derived based on the symmetric key K_{RAF}.

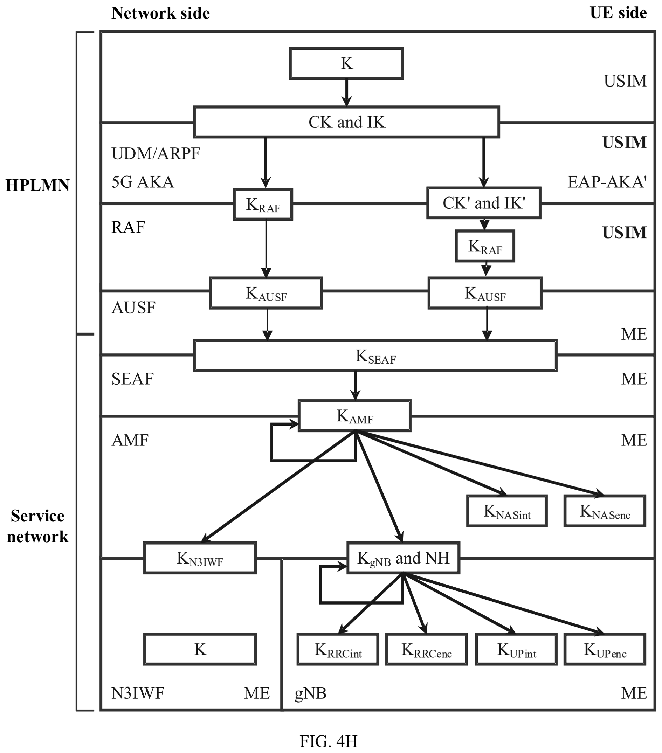

FIG. 4H is a diagram of another key architecture according to an embodiment of this application. Both a network side and a UE side perform key derivation based on the key architecture in FIG. 4H.

The following describes a trusted attestation process of UE.

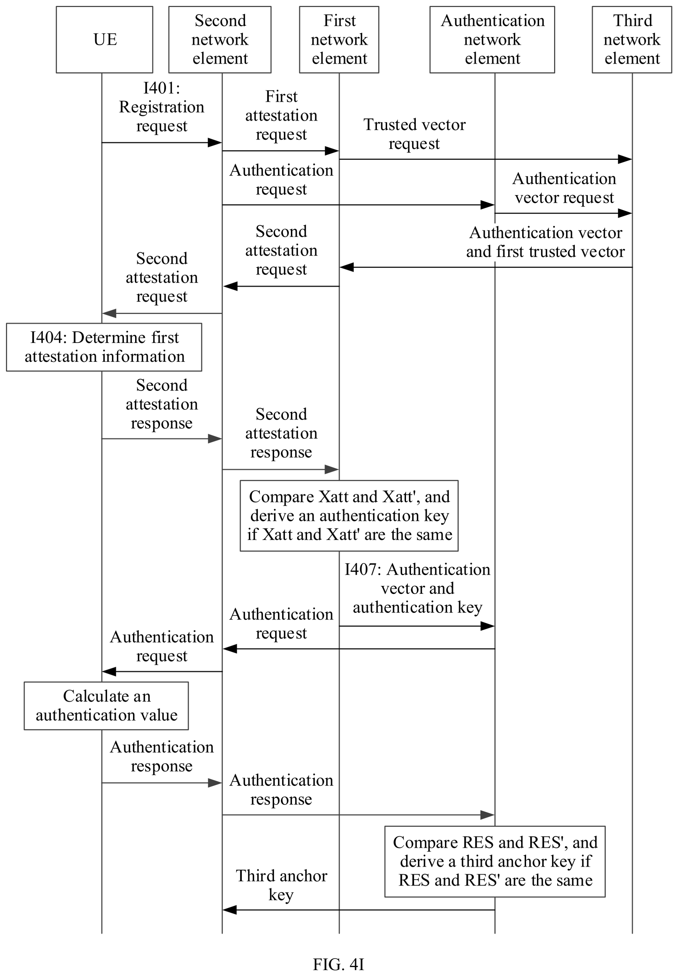

FIG. 4I is an interaction flowchart of another attestation method according to an embodiment of this application. The attestation method includes the following steps.

I401: UE sends a registration request to a second network element, where the request includes identification information of the UE.

In this embodiment, the second network element may be an AMF network element, or the second network element is a network element in which the AMF and an SEAF are co-deployed.

I402: The second network element sends a first attestation request to a first network element, where the request includes the identification information of the UE.

Specifically, the second network element sends an authentication request to an authentication network element, and the authentication network element sends an authentication vector request to a third network element. A sequence of sending the first attestation request and the authentication request is not particularly limited.

The first network element obtains a corresponding first trusted vector based on the identification information of the UE. For a specific process in which the first network element obtains the corresponding first trusted vector based on the identification information of the UE, refer to related descriptions corresponding to FIG. 4C. At least two obtaining methods are included. In addition, the third network element sends a generated authentication vector and the first trusted vector to the first network element.

I403: The first network element sends a second attestation request to the UE.

I404: The UE determines first attestation information.

I405: The UE sends the first attestation information to the first network element.

For specific descriptions of step I405, refer to related descriptions of step C408. Details are not described herein again.

I406: The first network element compares Xatt and Xatt', and generates a first trusted attestation result. If Xatt and Xatt' are the same, that is, the first trusted attestation result indicates that the UE is trustworthy, the first network element derives an authentication key K_{AUSF} based on a symmetric key K_{RAF}.

For specific descriptions of step I403 to step I406, refer to related descriptions of step C407 to step C409. Details are not described herein again.

I407: The first network element sends the authentication vector and the authentication key to the authentication network element.

I408: The authentication network element performs authentication on the UE.

In this embodiment, for a specific process in which the authentication network element performs authentication on the UE, refer to the description in FIG. 2C. Details are not described herein again.

I409: The authentication network element compares RES and RES', and when it is learned, through comparison, that RES and RES' are the same, the authentication network element derives a third anchor key based on the authentication key K_{AUSF}, and sends the third anchor key to the second network element.

In a possible embodiment, the attestation method further includes:
The first network element sends a second trusted vector to the second network element or a first node. The second trusted vector includes second expected information, the second trusted vector is used by the second network element or the first node to perform trusted attestation on the terminal, and the second expected information includes a second expected check value.

In this embodiment, the first network element sends the second trusted vector to the second network element or the first node, to deliver a trusted attestation capability to the second network element or the first node. Optionally, the second network element or the first node may start trusted attestation of the UE periodically orattestation based on another policy, to prevent local attestation information of the UE from being tampered with.

The first node may be an access network device. In addition, optionally, this embodiment may be independent of the method shown in FIG. 3, that is, does not depend on the first trusted attestation result of the UE. The second network element or the first node may initiate trusted attestation of the UE based on an actual situation after obtaining the second trusted vector. Optionally, if the first trusted attestation result indicates that the UE is trustworthy, the first network element sends the second trusted vector to the second network element or the first node.

A process in which the second network element or the first node performs trusted attestation on the UE is similar to that of the first network element, and includes: The second network element or the first node receives second attestation information of the UE, and obtains a second trusted attestation result of the terminal based on the second attestation information and second expected information. Optionally, the second network element or the first node may send the second trusted attestation result to the UE.

For example, the second network element or the first node performs trusted attestation based on second attestation information of the terminal and the second expected information. The second attestation information includes a second check value, the second check value is obtained by processing a second random number and local attestation information of the terminal by using a fifth derived key, and the fifth derived key is derived from the symmetric key. For a specific method for obtaining the second check value, refer to the method for obtaining a first check value. Details are not described herein again. The second expected check value is obtained by processing the second random number and the second expected attestation information by using the fifth derived key, and the second expected attestation information is the same as the first expected attestation information. When performing trusted attestation on the terminal, the second network element or the first node may learn, through comparison, of whether the second check value is the same as the second expected check value. The terminal is trustworthy if the second check value is the same as the second expected check value; or the terminal is untrustworthy if the second check value is different from the second expected check value.

For example, the second expected information further includes the second expected attestation information. For example, the second attestation information further includes the local attestation information of the terminal. In this application, when the second check value is the same as the second expected check value, and the local attestation information is the same as the second expected attestation information, the second network element or the first node determines that the terminal is trustworthy; or when the second check value is different from the second expected check value, and/or the local attestation information is different from the second expected attestation information, the terminal is untrustworthy. In this application, trusted verification is performed by verifying whether the two groups of parameters, namely, the second check value and the second expected check value, and the local attestation information and the second expected attestation information each are the same, to ensure higher reliability of the trusted attestation result of the terminal.

For example, the second trusted vector further includes the fifth derived key.

Specifically, the fifth derived key is a key that is derived by the network side and that is to be used by the second network element or the first node. The UE also derives the fifth derived key from the symmetric key based on a key derivation algorithm the same as that on the network side, and the UE and the second network element or the first node may perform trusted attestation based on the fifth derived key. A fifth derived key to be used by the first node is derived based on a fifth derived key to be used by the second network element, and the fifth derived key to be used by the second network element is derived based on the symmetric key.

In this embodiment, when the first network element does not complete a first time of trusted attestation of the UE, the second network element or the first node may request the second trusted vector from the third network element by using the first network element, or the second network element or the first node directly requests the second trusted vector from the third network element.

Optionally, after the first network element completes the first time of trusted attestation of the UE, the first network element may alternatively directly derive the fifth derived key based on the symmetric key. Further, optionally, because the first expected attestation information is the second expected attestation information, the first network element may generate the second random number, and then process the second expected attestation information and the second random number based on the fifth derived key to obtain the second expected check value. In this way, the first network element may obtain the second trusted vector.

The same as the first random number, the second random number may be a random number that is generated by the first network element or the third network element and that corresponds to the identification information of the UE, that is, the first network element or the third network element generates one second random number for each time of trusted attestation of the UE. The first network element or the third network element provides the second random number to the UE in a unicast or broadcast manner.

Optionally, when verifying the second expected check value, the second network element or the first node may process the second random number and the second expected attestation information based on the fifth derived key to obtain the second expected check value, and then verify the second expected check value based on the second expected check value.

For example, the second attestation information may further include the second random number, to indicate that the second check value corresponds to the second random number, in other words, the second check value is generated based on the second random number. Similarly, the second expected information may further include the second random number, to indicate that the second expected check value corresponds to the second random number, in other words, the second expected check value is generated based on the second random number. Whether the second attestation information corresponds to the second expected information may be determined by learning, through comparison, of whether the second random number in the second attestation information is the same as the second random number in the second expected information. Further, when the second random number in the second attestation information is the same as the second random number in the second expected information, the second check value is the same as the second expected check value, and the local attestation information is the same as the second expected attestation information, the second network element or the first node determines that the terminal is trustworthy; or when the second random number in the second attestation information is different from the second random number in the second expected information, and/or the second check value is different from the second expected check value, and/or the local attestation information is different from the second expected attestation information, the terminal is untrustworthy. In this application, trusted verification is performed by verifying whether the three groups of parameters, namely, the second check value and the second expected check value, the local attestation information and the second expected attestation information, and the second random number in the second attestation information and the second random number in the second expected information each are the same, to further improve reliability of the trusted attestation result of the terminal.

In a possible embodiment, the attestation method further includes:
The first network element receives the second trusted vector from the third network element.

In this embodiment, when the first network element does not complete the first time of trusted attestation of the UE, the first network element may request the second trusted vector from the third network element, and after generating the second trusted vector, the third network element sends the second trusted vector to the first network element.

The following specifically describes, by using an example in which a first node is an access network device, a process in which the first node performs trusted attestation on UE based on a second trusted vector.

In this embodiment, the same as FIG. 4A, a root key K used for authentication and a root key K_{TPM} used for trusted attestation are preset in a SIM card of the UE. In a production stage, a SIM card manufacturer presets a TPM function in the SIM card, and updates the root key K_{TPM} in the SIM card to a resource server 402 of an operator through a secure channel.

As shown in FIG. 4B, in this embodiment, both a network side and a UE side perform key derivation based on the key architecture in FIG. 4B. A key K_{gNB-RA} to be used by an access network device is derived based on a key K_{AMF-RA} to be used by an AMF network element.

The following describes a trusted attestation process of UE.

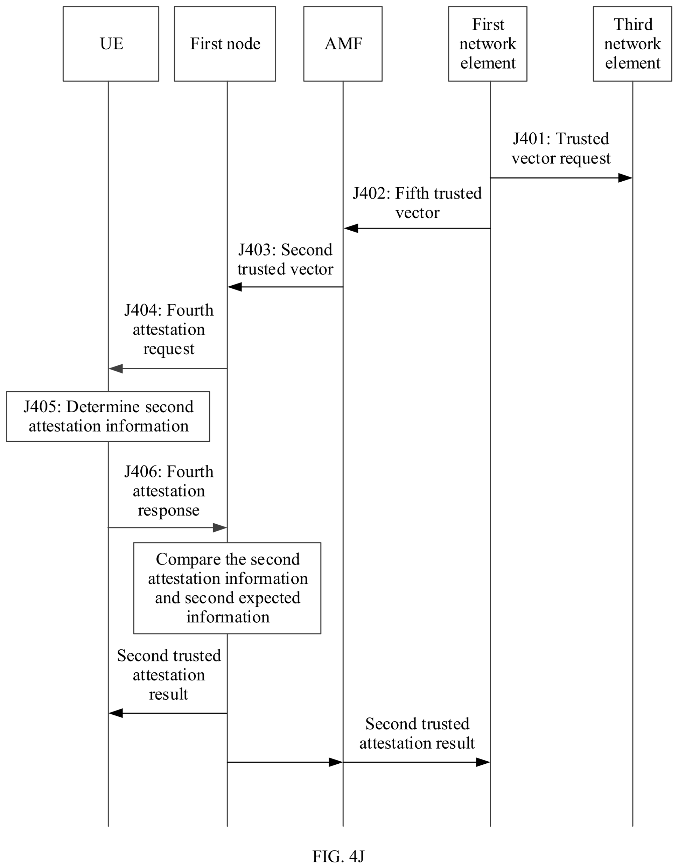

FIG. 4J is an interaction flowchart of another attestation method according to an embodiment of this application. The attestation method includes the following steps.

J401: A first network element sends a trusted vector request to a third network element, where the request includes identification information of UE.

Specifically, the trusted vector request is used to request a fifth trusted vector, and the fifth trusted vector includes a key K_{AMF-RA}, second expected attestation information, and a second expected check value. In this embodiment, an example in which the first network element obtains the fifth trusted vector from the third network element is used. In this case, the third network element performs key derivation to obtain the key K_{AMF-RA}, and processes the second expected attestation information and a second random number by using the key K_{AMF-RA} to obtain the second expected check value. The second random number may be a random number that is generated by the third network element and that corresponds to the identification information of the UE, or the second random number is a common random number that is broadcast by the third network element to a plurality of UEs in advance. The plurality of UEs are two or more UEs, and the plurality of UEs include the UE in this embodiment.

The third network element returns the fifth trusted vector to the first network element.

In this embodiment, the first network element may be an RAF network element, and the third network element may be a TPMF network element. Optionally, a UDM network element and the TPMF network element are co-deployed. Optionally, the TPMF network element and the RAF network element are co-deployed.

J402: The first network element sends the fifth trusted vector to an AMF network element.

The AMF network element obtains a second trusted vector based on the fifth trusted vector.

Specifically, the AMF network element derives a key K_{gNB-RA} based on the key K_{AMF-RA}, and the second trusted vector includes second expected information. Further, the second trusted vector may further include the key K_{gNB-RA}.

J403: The AMF network element sends the second trusted vector to a first node. The first node is an access network device.

J404: The first node sends a fourth attestation request to the UE.

Specifically, the fourth attestation request is used to trigger the UE to determine second attestation information. The first node may periodically send the fourth attestation request to the UE, or the first node sends the fourth attestation request to the UE based on another policy. The another policy is, for example, sending the fourth attestation request to the UE after receiving a registration request of the UE or after the UE requests a service.

When the second random number is a random number that is generated by the third network element and that corresponds to the identification information of the UE, the fourth attestation request includes the second random number. When the second random number is a common random number that is broadcast by the third network element to the plurality of UEs in advance, the UE has the second random number, and the fourth attestation request does not need to carry the second random number, and is only used to trigger the UE to determine the second attestation information.

J405: The UE determines the second attestation information.

Specifically, a UE side also derives the key K_{gNB-RA}, and the UE processes local attestation information and the second random number based on the key K_{gNB-RA} to obtain a second check value. Similar to first attestation information, the second attestation information includes the second check value. For another example, the second attestation information further includes the local attestation information. For example, the second attestation information is a combination value of the local attestation information and the second check value, and the second attestation information may be obtained through splicing in a sequence of the local attestation information and the second check value. Optionally, the second attestation information further includes the second random number. For example, the second attestation information is a combination value of the second random number, the local attestation information, and the second check value, and the second attestation information may be obtained through splicing in a sequence of the second random number, the local attestation information, and the second check value.

J406: The UE sends a fourth attestation response to the first node. The fourth attestation response includes the second attestation information. Optionally, the fourth attestation response may further include the second random number and/or the local attestation information.

J407: The first node determines a second trusted attestation result based on the second attestation information and the second expected information.

For specific descriptions of step J407, refer to descriptions of step C409. Details are not described herein again.

J408: The first node feeds back the second trusted attestation result to the UE.

Optionally, the first node feeds back the second trusted attestation result to the first network element.

Specifically, the first node feeds back the second trusted attestation result to the first network element by using the AMF, so that the first network element learns of a trusted attestation result of the UE from the first node, and the first node endorses the local attestation information of the UE.

As shown in FIG. 4J, when the second network element performs trusted attestation on the UE based on the second trusted vector, for example, the second network element is an AMF, the fifth trusted vector is the second trusted vector. After the AMF network element receives the second trusted vector, the AMF network element directly sends the fourth attestation request to the UE by using the access network device. The UE returns the fourth attestation response to the AMF network element, and the AMF network element obtains the second trusted attestation result based on the fourth attestation response.

In a possible embodiment, the attestation method further includes:
The first network element sends a third trusted vector to the second network element or a first node. The third trusted vector includes a fifth derived key and the second expected attestation information, the third trusted vector is used by the second network element or the first node to perform trusted attestation on a terminal, and the fifth derived key is derived from a symmetric key.

In this embodiment, the first network element sends the third trusted vector to the second network element or the first node, to deliver a trusted attestation capability to the second network element or the first node. Optionally, the second network element or the first node may start trusted attestation of the UE periodically or attestation based on another policy, to prevent local attestation information of the UE from being tampered with. The second expected attestation information is the foregoing first expected attestation information. Different from the foregoing embodiment corresponding to the second trusted vector, in this embodiment, the second network element or the first node generates the second random number corresponding to the identification information of the UE, and then the second network element or the first node processes the second random number and the second expected attestation information based on the fifth derived key to obtain the second expected check value. The second network element or the first node may perform trusted attestation on the UE based on the second random number, the second expected attestation information, and the second expected check value, to obtain the second trusted attestation result of the UE. For related details in this embodiment, refer to the foregoing embodiment corresponding to the second trusted vector.

Optionally, this embodiment may be independent of the method shown in FIG. 3, that is, does not depend on the first trusted attestation result of the UE. The second network element or the first node may initiate trusted attestation of the UE based on an actual situation after obtaining the third trusted vector. Optionally, if the first trusted attestation result indicates that the UE is trustworthy, the first network element sends the third trusted vector to the second network element or the first node.

Specifically, the fifth derived key is a key that is derived by a network side and that is to be used by the second network element or the first node. The UE also derives the fifth derived key from the symmetric key based on a key derivation algorithm the same as that on the network side, and the UE and the second network element or the first node may perform trusted attestation based on the fifth derived key.

In this embodiment, when the first network element does not complete a first time of trusted attestation of the UE, the second network element or the first node may request the third trusted vector from the third network element by using the first network element, or the second network element or the first node directly requests the third trusted vector from the third network element.

Optionally, after the first network element completes the first time of trusted attestation of the UE, the first network element may alternatively directly derive the fifth derived key based on the symmetric key. Further, optionally, because the first expected attestation information is the second expected attestation information, the first network element may generate the second random number, and then process the second expected attestation information and the second random number based on the fifth derived key to obtain the second expected check value. In this way, the first network element may obtain the third trusted vector.

A process in which the second network element or the first node performs trusted attestation on the UE is similar to that of the first network element, and includes: The second network element or the first node receives second attestation information of the UE, and obtains a second trusted attestation result of the terminal based on the second attestation information and second expected information. Optionally, the second network element or the first node may send the second trusted attestation result to the UE.

In a possible embodiment, the attestation method further includes:
The first network element receives the third trusted vector from the third network element.

In this embodiment, when the first network element does not complete the first time of trusted attestation of the UE, the first network element may request the third trusted vector from the third network element, and after generating the third trusted vector, the third network element sends the third trusted vector to the first network element.

The following specifically describes, by using an example in which a first node is an access network device, a process in which the first node performs trusted attestation on UE based on a third trusted vector.

In this embodiment, the same as FIG. 4A, a root key K used for authentication and a root key K_{TPM} used for trusted attestation are preset in a SIM card of the UE. In a production stage, a SIM card manufacturer presets a TPM function in the SIM card, and updates the root key K_{TPM} in the SIM card to a resource server 402 of an operator through a secure channel.

As shown in FIG. 4B, in this embodiment, both a network side and a UE side perform key derivation based on the key architecture in FIG. 4B. A key K_{gNB-RA} to be used by an access network device is derived based on a key K_{AMF-RA} to be used by an AMF network element.

The following describes a trusted attestation process of UE.

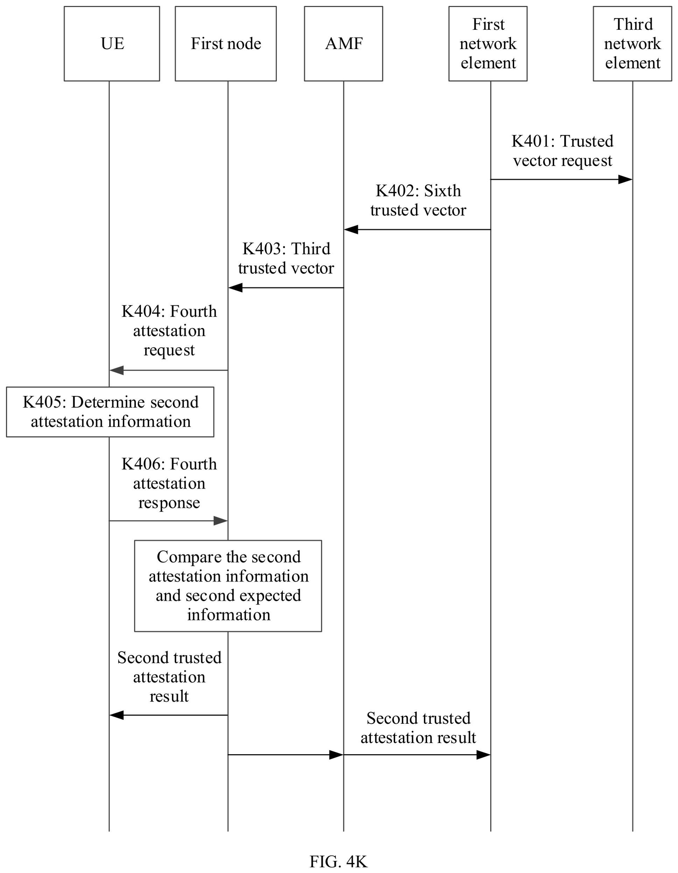

FIG. 4K is an interaction flowchart of another attestation method according to an embodiment of this application. The attestation method includes the following steps.

K401: A first network element sends a trusted vector request to a third network element, where the request includes identification information of UE.

Specifically, the trusted vector request is used to request a sixth trusted vector, and the sixth trusted vector includes a key K_{AMF-RA} and second expected attestation information. In this embodiment, an example in which the first network element obtains the sixth trusted vector from the third network element is used. In this case, the third network element performs key derivation to obtain the key K_{AMF-RA}. The third network element returns the sixth trusted vector to the first network element.

In this embodiment, the first network element may be an RAF network element, and the third network element may be a TPMF network element. Optionally, a UDM network element and the TPMF network element are co-deployed. Optionally, the TPMF network element and the RAF network element are co-deployed.

K402: The first network element sends the sixth trusted vector to an AMF network element.

K403: The AMF network element sends a third trusted vector to a first node. The first node is an access network device.

The AMF network element obtains the third trusted vector based on the sixth trusted vector. Specifically, the AMF network element derives a key K_{gNB-RA} based on the key K_{AMF-RA}, and the third trusted vector includes the key K_{gNB-RA} and the second expected attestation information.

K404: The first node sends a fourth attestation request to the UE.

Specifically, the fourth attestation request is used to trigger the UE to determine second attestation information, and the fourth attestation request includes a second random number. The first node generates a second random number corresponding to the identification information of the UE. The first node processes the second random number and the second expected attestation information based on the key K_{gNB-RA} to obtain a second expected check value. The first node may periodically send the fourth attestation request to the UE, or the first node sends the fourth attestation request to the UE based on another policy. The another policy is, for example, sending the fourth attestation request to the UE after receiving a registration request of the UE or after the UE requests a service.

K405: The UE determines the second attestation information.

K406: The UE sends a fourth attestation response to the first node. The fourth attestation response includes the second attestation information. Optionally, the fourth attestation response may further include the second random number and/or local attestation information.

K407: The first node determines a second trusted attestation result based on the second attestation information and the second expected information.

For specific descriptions of step K407, refer to descriptions of step C409. Details are not described herein again.

K408: The first node feeds back the second trusted attestation result to the UE.

Optionally, the first node feeds back the second trusted attestation result to the first network element.

As shown in FIG. 4K, when the first node and the AMF network element in FIG. 4K are replaced with the AMF network element, the sixth trusted vector is the third trusted vector. After the AMF network element receives the third trusted vector, the AMF network element directly sends the fourth attestation request to the UE by using the access network device. A subsequent processing procedure is the same as that when the first node is an access network device. Details are not described herein again.

An embodiment of this application further provides an attestation method, to perform trusted attestation on a third node. The third node may be an access network device or a core network element.

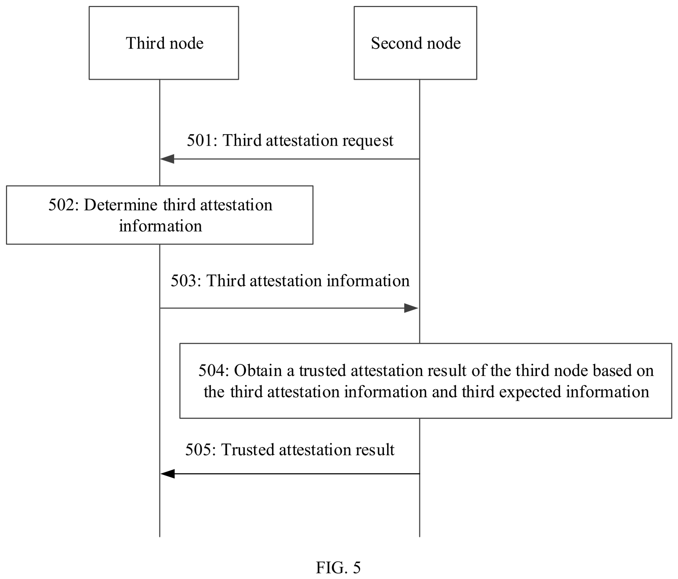

FIG. 5 is a flowchart of another attestation method according to an embodiment of this application. The attestation method includes the following steps.

501: A second node sends a third attestation request to a third node.

Correspondingly, the third node receives the third attestation request from the second node.

Specifically, the third attestation request is used to trigger the third node to determine third attestation information.

The second node may be an RAF network element, an OAM network element, or an NRF network element. When the second node is an RAF network element, and the third node is a core network element, the third node is a core network element other than the RAF network element. When the second node is an OAM network element, and the third node is a core network element, the third node is a core network element other than the OAM network element. When the second node is an NRF network element, and the third node is a core network element, the third node is a core network element other than the NRF network element.

502: The third node determines the third attestation information, and the third node determines the third attestation information in response to the third attestation request.

503: The third node sends the third attestation information to the second node.

Correspondingly, the second node receives the third attestation information from the third node.

504: The second node obtains a trusted attestation result of the third node based on the third attestation information and the third expected information.

Specifically, the trusted attestation result indicates that the third node is trustworthy or untrustworthy.

In this embodiment, the second node may determine the trusted attestation result of the third node based on the third attestation information of the third node and the third expected information, to implement trusted attestation of the third node.

In a possible embodiment, as shown in FIG. 5, the attestation method further includes:
505: The second node sends the trusted attestation result to the third node.

Correspondingly, the third node receives the trusted attestation result of the third node from the second node.

It can be learned that, in this embodiment, the second node feeds back the trusted attestation result of the third node to the third node, so that the third node obtains the trusted attestation result of the third node.

In a possible embodiment, the third attestation information in step 502 includes a third check value, the third check value is obtained by processing a third random number and local attestation information by using a symmetric key, the symmetric key is a key used for trusted attestation, and the symmetric key means that the second node and the third node have a same key used for trusted attestation. The third expected information includes a third expected check value. In step 504, the second node learns, through comparison, of whether the third expected check value is the same as the third check value, and when it is learned, through comparison, that the third expected check value is the same as the third check value, the trusted attestation result of the third node is that the third node is trustworthy; or when it is learned, through comparison, that the third expected check value is different from the third check value, the trusted attestation result of the third node is that the third node is untrustworthy.

In a possible embodiment, the third attestation information in step 502 further includes the local attestation information of the third node. The third expected information further includes third expected attestation information. In step 504, the second node learns, through comparison, of whether the third expected attestation information is the same as the local attestation information of the third node, and learns, through comparison, of whether the third expected check value is the same as the third check value, and when it is learned, through comparison, that the third expected attestation information is the same as the local attestation information of the third node, and the third expected check value is the same as the third check value, the trusted attestation result of the third node is that the third node is trustworthy; or when it is learned, through comparison, that the third expected attestation information is different from the local attestation information of the third node, and/or the third expected check value is different from the third check value, the trusted attestation result of the third node is that the third node is untrustworthy. In this application, trusted verification is performed by verifying whether the two groups of parameters, namely, the third check value and the third expected check value, and the local attestation information of the third node and the third expected attestation information each are the same, to ensure higher reliability of the trusted attestation result of the third node.

For example, the third attestation information may further include the third random number, to indicate that the third check value corresponds to the third random number. Similarly, the third expected information may further include the third random number, to indicate that the third expected attestation information and the third expected check value correspond to the third random number. In step 504, the second node further learns, through comparison, of whether the third random number in the third attestation information is the same as the third random number in the third expected information. When it is learned, through comparison, that the third expected attestation information is the same as the local attestation information of the third node, the third expected check value is the same as the third check value, and the third random number in the third attestation information is the same as the third random number in the third expected information, the trusted attestation result of the third node is that the third node is trustworthy; or when it is learned, through comparison, that the third expected attestation information is different from the local attestation information of the third node, and/or the third expected check value is different from the third check value, and/or the third random number in the third attestation information is different from the third random number in the third expected information, the trusted attestation result of the third node is that the third node is untrustworthy. In this application, trusted verification is performed by verifying whether the three groups of parameters, namely, the third check value and the third expected check value, the local attestation information of the third node and the third expected attestation information, and the third random number in the third attestation information and the third random number in the third expected information each are the same, to further improve reliability of the trusted attestation result of the third node.

In a possible embodiment, the symmetric key is any one of the following:
Root key used for trusted attestation: To be specific, the third node is preconfigured with the root key specially used for trusted attestation, and securely shares the root key with a network side, so that the third node and the second node perform trusted attestation based on the root key.

Sixth derived key: The sixth derived key is derived from the root key used for trusted attestation. To be specific, the third node is preconfigured with the root key specially used for trusted attestation, and securely shares the root key with the network side. A terminal and the network side (for example, the second node or the third network element) derive the sixth derived key based on a same derivation algorithm, so that the third node and the second node perform trusted attestation based on the sixth derived key.

In a possible embodiment, in the attestation method, the second node may be co-deployed with the third network element, and the third network element is a TPMF network element. Optionally, a UDM network element and the TPMF network element are co-deployed. Optionally, the TPMF network element and the RAF network element are co-deployed. In this case, the second node stores the third expected attestation information of the third node, and the second node may generate the third random number, and then process the third random number and the third expected attestation information based on the symmetric key to obtain the third expected check value. In this way, the second node may obtain the third expected information, and the second node may start trusted attestation of the third node based on an actual requirement, that is, send the third attestation request to the third node. The third attestation request includes the third random number.

In a possible embodiment, when the second node and the third network element are separately deployed, the attestation method further includes the following steps:
The second node sends a trusted vector request to the third network element. The trusted vector request includes identification information of the third node.

The second node receives a fourth trusted vector from the third network element. The fourth trusted vector includes the third expected information.

Specifically, the third network element may be a TPMF network element. Optionally, a UDM network element and the TPMF network element are co-deployed. Optionally, the TPMF network element and the RAF network element are co-deployed. For example, the third network element stores the third expected attestation information of the third node, and the third network element may generate the third random number, and then process the third random number and the third expected attestation information based on the symmetric key to obtain the third expected check value. The third expected information includes the third expected check value. Optionally, the third expected information further includes the third expected attestation information. Optionally, the third expected information further includes the third random number. For another example, the fourth trusted vector may further include the symmetric key.

The following specifically describes, by using an example in which a second node is an OAM network element and a third node is an access network device, a process in which the OAM network element performs trusted attestation on the access network device.

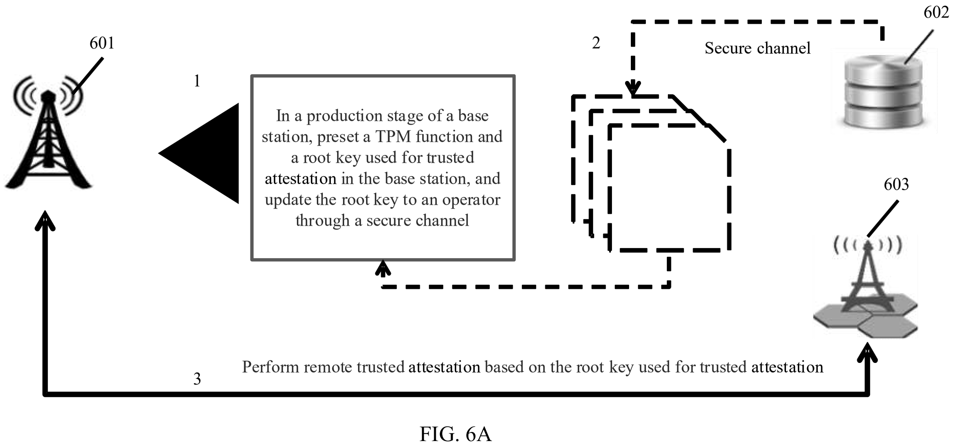

FIG. 6A is a diagram of another trusted attestation procedure according to an embodiment of this application. Similar to UE, an example in which a security chip is a TPM chip is used. In a production stage of an access network device 601, a TPM function and a root key used for trusted attestation are preset in the access network device, and the root key is updated to a resource server 602 of an operator through a secure channel. In this way, in a subsequent process of using the access network device 601, remote trusted attestation may be performed between an operator network 603 and the access network device 601 based on the root key. Alternatively, the operator network 603 performs key derivation based on the root key K in the resource server 602 to obtain a sixth derived key, the access network device 601 performs key derivation based on the root key in the access network device 601 to obtain the sixth derived key, and remote trusted attestation may be performed between the operator network 603 and the access network device 601 based on the sixth derived key.

The following specifically describes a trusted attestation process of the access network device.

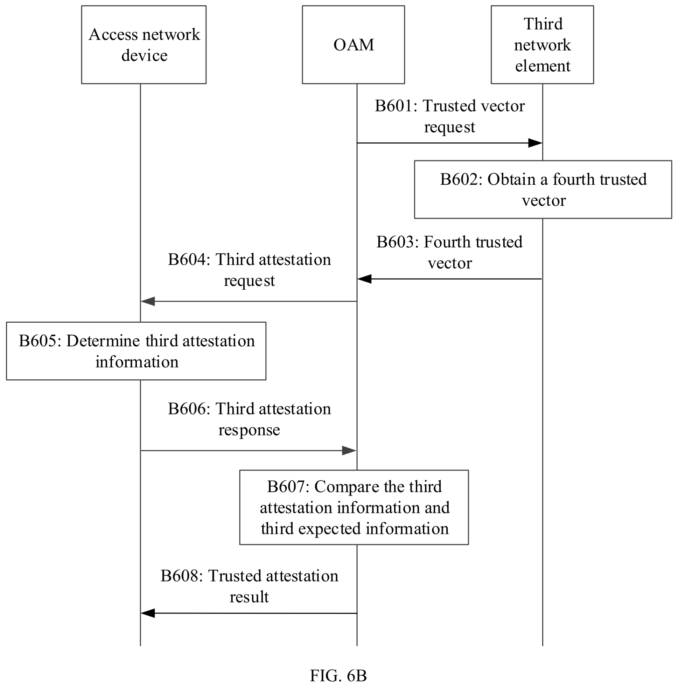

FIG. 6B is an interaction flowchart of another attestation method according to an embodiment of this application. The attestation method includes the following steps.

B601: An OAM network element sends a trusted vector request to a third network element, where the request includes identification information of the OAM network element.

B602: The third network element obtains a fourth trusted vector based on the identification information of the OAM network element.

Specifically, an example in which the fourth trusted vector includes third expected information, and the third expected information includes a third random number, third expected attestation information, and a third expected check value is used.

B603: The third network element sends the fourth trusted vector to the OAM network element.

B604: The OAM network element sends a third attestation request to the access network device, where the request includes the third random number.

B605: The access network device determines third attestation information.

For example, the third attestation information includes the third random number, local attestation information of the access network device, and a third check value.

B606: The access network device sends a third attestation response to the OAM network element, where the response includes the third attestation information.

B607: The OAM network element compares the third attestation information and the third expected information, to obtain a trusted attestation result of the access network device.

For example, the OAM network element learns, through comparison, of whether the third random number in the third attestation information is the same as the third random number in the third expected information; the OAM network element learns, through comparison, of whether the third expected attestation information is same as the local attestation information of the access network device, and learns, through comparison, of whether the third expected check value is the same as the third check value; and when it is learned, through comparison, that the third random number in the third attestation information is the same as the third random number in the third expected information, the third expected attestation information is same as the local attestation information of the access network device, and the third expected check value is the same as the third check value, the trusted attestation result of the access network device is that the access network device is trustworthy; or when it is learned, through comparison, that the third random number in the third attestation information is different from the third random number in the third expected information, and/or the third expected attestation information is not same as the local attestation information of the access network device, and/or the third expected check value is different from the third check value, the trusted attestation result of the access network device is that the access network device is untrustworthy.

B608: The OAM network element returns the trusted attestation result to the access network device.

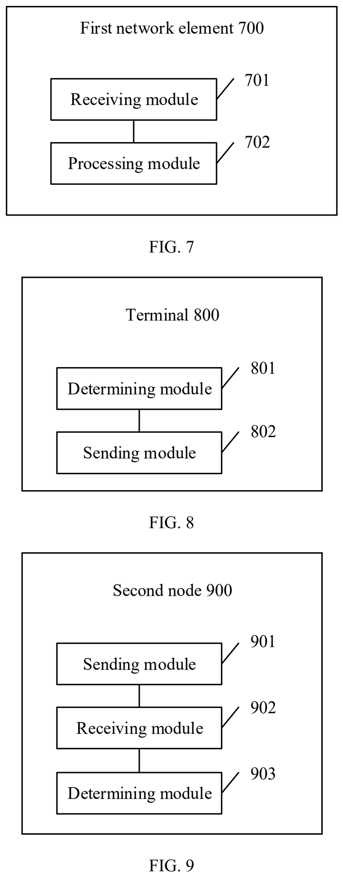

FIG. 7, FIG. 8, FIG. 9, and FIG. 10 each are a diagram of a structure of a possible apparatus according to an embodiment of this application. The apparatuses may be configured to implement functions of the first network element, the terminal, the second node, and the third node in the foregoing method embodiments. Therefore, beneficial effects in the foregoing method embodiments can also be implemented. In this embodiment of this application, the apparatus may be a first network element, a terminal, a second node, and a third node, or may be a module (for example, a chip) used in the first network element, the terminal, the second node, and the third node.

FIG. 7 is a diagram of a structure of a first network element according to an embodiment of this application. A first network element 700 includes a receiving module 701 and a processing module 702. The first network element 700 is configured to implement a function of the first network element in the method embodiment shown in FIG. 3. Alternatively, the first network element 700 may include a module configured to implement any function or operation of the first network element in the method embodiment shown in FIG. 3, and the module may be implemented completely or partially by using software, hardware, firmware, or any combination thereof.

When the first network element 700 is configured to implement the function of the first network element in the method embodiment shown in FIG. 3, the receiving module 701 is configured to receive first attestation information from a terminal. The processing module 702 is configured to obtain a first trusted attestation result of the terminal based on the first attestation information and first expected information.

FIG. 8 is a diagram of a structure of a terminal according to an embodiment of this application. A terminal 800 includes a determining module 801 and a sending module 802. The terminal 800 is configured to implement a function of the terminal in the method embodiment shown in FIG. 3. Alternatively, the terminal 800 may include a module configured to implement any function or operation of the terminal in the method embodiment shown in FIG. 3, and the module may be implemented completely or partially by using software, hardware, firmware, or any combination thereof.

When the terminal 800 is configured to implement the function of the terminal in the method embodiment shown in FIG. 3, the determining module 801 is configured to determine first attestation information. The sending module 802 is configured to send the first attestation information to a first network element.

For example, an embodiment of this application further provides a communication system. The system includes the first network element and the second network element shown in FIG. 7.

The second network element is configured to send a first attestation request to the first network element. The first attestation request includes identification information of a terminal.

The first network element 700 is configured to receive first attestation information from the terminal.

The first network element 700 is further configured to obtain a first trusted attestation result of the terminal based on the first attestation information and first expected information.

FIG. 9 is a diagram of a structure of a second node according to an embodiment of this application. A second node 900 includes a sending module 901, a receiving module 902, and a determining module 903. The second node 900 is configured to implement a function of the second node in the method embodiment shown in FIG. 5. Alternatively, the second node 900 may include a module configured to implement any function or operation of the second node in the method embodiment shown in FIG. 5, and the module may be implemented completely or partially by using software, hardware, firmware, or any combination thereof.

When the second node 900 is configured to implement the function of the second node in the method embodiment shown in FIG. 5, the sending module 901 is configured to send a third attestation request to a third node. The receiving module 902 is configured to receive third attestation information from the third node. The determining module 903 is configured to obtain a trusted attestation result of the third node based on the third attestation information and third expected information.

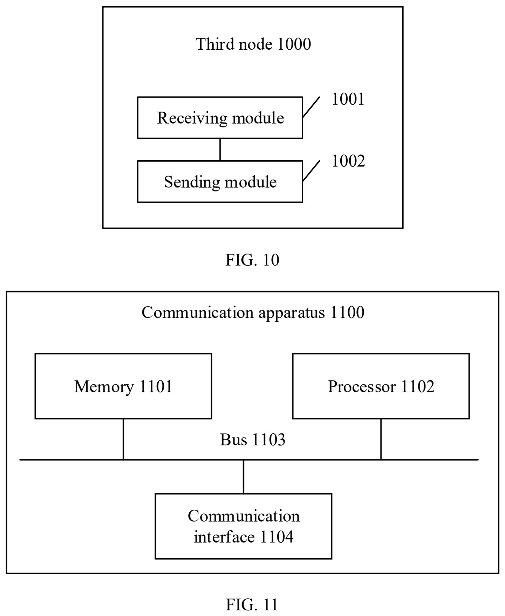

FIG. 10 is a diagram of a structure of a third node according to an embodiment of this application. A third node 1000 includes a receiving module 1001 and a sending module 1002. The third node 1000 is configured to implement a function of the third node in the method embodiment shown in FIG. 5. Alternatively, the third node 1000 may include a module configured to implement any function or operation of the third node in the method embodiment shown in FIG. 5, and the module may be implemented completely or partially by using software, hardware, firmware, or any combination thereof.

When the third node 1000 is configured to implement the function of the third node in the method embodiment shown in FIG. 5, the receiving module 1001 is configured to receive a third attestation request from a second node. The sending module 1002 is configured to send third attestation information to the second node. The third attestation information includes a third check value, the third check value is obtained by processing a third random number and local attestation information of the third node by using a symmetric key, and the symmetric key is a key used for trusted attestation.

For example, an embodiment of this application further provides a communication system. The system includes the second node shown in FIG. 9 and the third node shown in FIG. 10.

FIG. 11 is a diagram of a structure of a communication apparatus according to an embodiment of this application.

The communication apparatus 1100 includes a memory 1101, a processor 1102, a communication interface 1104, and a bus 1103. The memory 1101, the processor 1102, and the communication interface 1104 are communicatively connected to each other through the bus 1103. There may be one or more memories 1101, and there may be one or more processors 1102.

For example, the communication apparatus 1100 may be a chip or a chip system.

The memory 1101 may be a read-only memory (Read-Only Memory, ROM), a static storage device, a dynamic storage device, or a random access memory (Random Access Memory, RAM). The memory 1101 may store a program. When the program stored in the memory 1101 is executed by the processor 1102, the processor 1102 is configured to perform steps of the attestation method in any one of the foregoing embodiments.

The processor 1102 may be a general-purpose central processing unit (Central Processing Unit, CPU), a microprocessor, an application-specific integrated circuit (application-specific integrated circuit, ASIC), a graphics processing unit (graphics processing unit, GPU), or one or more integrated circuits, and is configured to execute a related program, to implement the attestation method in any one of the foregoing embodiments.

The processor 1102 may alternatively be an integrated circuit chip, and has a signal processing capability. In an implementation process, steps of the attestation method in any one of the foregoing embodiments of this application may be completed by using an integrated logic circuit of hardware in the processor 1102 or by using instructions in a form of software. Alternatively, the processor 1102 may be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the attestation method described with reference to any one of embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1101, and the processor 1102 reads information from the memory 1101 and completes the attestation method in any one of the foregoing embodiments in combination with the hardware of the processor 1102.

The communication interface 1104 is a transceiver apparatus including but not limited to a transceiver, to implement communication between the communication apparatus 1100 and another device or a communication network. For example, the communication apparatus 1100 may obtain second data through the communication interface 1104.

The bus 1103 may include a path for transmitting information between various components (for example, the memory 1101, the processor 1102, and the communication interface 1104) of the communication apparatus 1100.

It should be noted that, although only the memory, the processor, and the communication interface of the communication apparatus 1100 shown in FIG. 11 are shown, in a specific implementation process, a person skilled in the art should understand that the communication apparatus 1100 may further include another component necessary for normal running. In addition, based on a specific requirement, a person skilled in the art should understand that the communication apparatus 1100 may further include a hardware component for implementing another additional function. In addition, a person skilled in the art should understand that the communication apparatus 1100 may include only a component necessary for implementing embodiments of this application, and does not need to include all the components shown in FIG. 11.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An attestation method, wherein the method comprises:
receiving, by a first network element, first attestation information from a terminal; and
obtaining, by the first network element, a first trusted attestation result of the terminal based on the first attestation information and first expected information.

2. The method according to claim 1, wherein the first attestation information comprises a first check value, the first check value is obtained by processing a first random number and local attestation information of the terminal by using a symmetric key, and the symmetric key is a key used for trusted attestation.

3. The method according to claim 2, wherein the first attestation information further comprises the local attestation information.

4. The method according to any one of claims 1 to 3, wherein the first expected information comprises a first expected check value.

5. The method according to claim 4, wherein the first expected information further comprises first expected attestation information.

6. The method according to any one of claims 2 to 5, wherein before receiving, by the first network element, the first attestation information from the terminal, the method further comprises:
receiving, by the first network element, a first attestation request from a second network element, wherein the first attestation request comprises identification information of the terminal; and
sending, by the first network element, a second attestation request to the terminal, wherein the second attestation request comprises the first random number, and the first random number corresponds to the identification information of the terminal.

7. The method according to any one of claims 2 to 6, wherein the method further comprises:
obtaining, by the first network element, a first trusted vector corresponding to the identification information of the terminal, wherein the first trusted vector comprises the first expected information.

8. The method according to claim 7, wherein obtaining, by the first network element, the first trusted vector corresponding to the identification information of the terminal comprises:
sending, by the first network element, a trusted vector request to a third network element, wherein the trusted vector request comprises the identification information of the terminal; and
receiving, by the first network element, the first trusted vector that corresponds to the identification information of the terminal and that is sent by the third network element.

9. The method according to claim 7, wherein obtaining, by the first network element, the first trusted vector corresponding to the identification information of the terminal comprises:
receiving, by the first network element, the first trusted vector from an authentication network element.

10. The method according to any one of claims 7 to 9, wherein the first trusted vector further comprises the symmetric key.

11. The method according to any one of claims 2 to 10, wherein the symmetric key is any one of the following:
a root key used for trusted attestation;
a first derived key, wherein the first derived key is derived from the root key used for trusted attestation;
a second derived key, wherein the second derived key is derived from a root key used for authentication; and
a third derived key, wherein the third derived key is derived from an authentication key.

12. The method according to any one of claims 2 to 11, wherein the method further comprises:
performing, by the first network element, key derivation based on the symmetric key, to obtain a fourth derived key, wherein the fourth derived key is either of the following: a first anchor key and the authentication key.

13. The method according to any one of claims 2 to 12, wherein the method further comprises:
sending, by the first network element, a second trusted vector to the second network element or a first node, wherein the second trusted vector comprises second expected information, the second trusted vector is used by the second network element or the first node to perform trusted attestation on the terminal, and the second expected information comprises a second expected check value.

14. The method according to claim 13, wherein the second trusted vector further comprises a fifth derived key, and the fifth derived key is derived from the symmetric key.

15. The method according to claim 13 or 14, wherein the method further comprises:
receiving, by the first network element, the second trusted vector from the third network element.

16. The method according to any one of claims 2 to 12, wherein the method further comprises:
sending, by the first network element, a third trusted vector to the second network element or a first node, wherein the third trusted vector comprises a fifth derived key and second expected attestation information, the third trusted vector is used by the second network element or the first node to perform trusted attestation on the terminal, and the fifth derived key is derived from the symmetric key.

17. The method according to claim 16, wherein the method further comprises:
receiving, by the first network element, the third trusted vector from the third network element.

18. The method according to any one of claims 1 to 17, wherein the method further comprises:
sending, by the first network element, the first trusted attestation result to the terminal.

19. An attestation method, wherein the method comprises:
determining, by a terminal, first attestation information; and
sending, by the terminal, the first attestation information to a first network element.

20. The method according to claim 19, wherein the first attestation information comprises a first check value, the first check value is obtained by processing a first random number and local attestation information of the terminal by using a symmetric key, and the symmetric key is a key used for trusted attestation.

21. The method according to claim 20, wherein the first attestation information further comprises the local attestation information.

22. The method according to claim 20 or 21, wherein before determining, by the terminal, the first attestation information, the method further comprises:
receiving, by the terminal, a second attestation request from the first network element, wherein the second attestation request comprises the first random number.

23. The method according to any one of claims 20 to 22, wherein the symmetric key is any one of the following:
a root key used for trusted attestation;
a first derived key, wherein the first derived key is derived from the root key used for trusted attestation;
a second derived key, wherein the second derived key is derived from a root key used for authentication; and
a third derived key, wherein the third derived key is derived from an authentication key.

24. The method according to any one of claims 19 to 23, wherein the method further comprises:
receiving, by the terminal, a first trusted attestation result of the terminal from the first network element, wherein the first trusted attestation result is obtained based on the first attestation information and first expected information.

25. The method according to claim 24, wherein the first expected information comprises a first expected check value.

26. The method according to claim 25, wherein the first expected information further comprises first expected attestation information.

27. The method according to any one of claims 19 to 26, wherein the method further comprises:
sending, by the terminal, second attestation information to a second network element or a first node.

28. An attestation method, wherein the method comprises:
sending, by a second network element, a first attestation request to a first network element, wherein the first attestation request comprises identification information of a terminal;
receiving, by the first network element, first attestation information from the terminal; and
obtaining, by the first network element, a first trusted attestation result of the terminal based on the first attestation information and first expected information.

29. The method according to claim 28, wherein the first attestation information comprises a first check value, the first check value is obtained by processing a first random number and local attestation information of the terminal by using a symmetric key, and the symmetric key is a key used for trusted attestation.

30. The method according to claim 29, wherein the first attestation information further comprises the local attestation information.

31. The method according to claim 29 or 30, wherein before receiving, by the first network element, the first attestation information from the terminal, the method further comprises:
sending, by the first network element, a second attestation request to the terminal, wherein the second attestation request comprises the first random number, and the first random number corresponds to the identification information of the terminal.

32. The method according to any one of claims 28 to 31, wherein the method further comprises the following step:
obtaining, by the first network element, a first trusted vector corresponding to the identification information of the terminal, wherein the first trusted vector comprises the first expected information.

33. The method according to claim 32, wherein the method further comprises:
sending, by the first network element, a trusted vector request to a third network element, wherein the trusted vector request comprises the identification information of the terminal; and
sending, by the third network element, the first trusted vector corresponding to the identification information of the terminal to the first network element.

34. The method according to claim 32, wherein the method further comprises:
receiving, by the first network element, the first trusted vector from an authentication network element.

35. The method according to any one of claims 29 to 34, wherein the symmetric key is any one of the following:
a root key used for trusted attestation;
a first derived key, wherein the first derived key is derived from the root key used for trusted attestation;
a second derived key, wherein the second derived key is derived from a root key used for authentication; and
a third derived key, wherein the third derived key is derived from an authentication key.

36. The method according to any one of claims 29 to 35, wherein the method further comprises:
performing, by the first network element, key derivation based on the symmetric key, to obtain a fourth derived key, wherein the fourth derived key is either of the following: a first anchor key and the authentication key.

37. The method according to any one of claims 29 to 36, wherein the method further comprises:
sending, by the first network element, a second trusted vector to the second network element or a first node, wherein the second trusted vector comprises second expected information, the second trusted vector is used by the second network element or the first node to perform trusted attestation on the terminal, and the second expected information comprises a second expected check value.

38. The method according to claim 37, wherein the method further comprises:
sending, by the third network element, the second trusted vector to the first network element.

39. The method according to any one of claims 29 to 36, wherein the method further comprises:
sending, by the first network element, a third trusted vector to the second network element or a first node, wherein the third trusted vector comprises a fifth derived key and second expected attestation information, the third trusted vector is used by the second network element or the first node to perform trusted attestation on the terminal, and the fifth derived key is derived from the symmetric key;
obtaining, by the second network element or the first node, a second random number; and
obtaining, by the second network element or the first node, a second expected check value based on the fifth derived key, the second random number, and the second expected attestation information.

40. The method according to claim 39, wherein the method further comprises:
sending, by the third network element, the third trusted vector to the first network element.

41. The method according to any one of claims 37 to 40, wherein the method further comprises:
receiving, by the second network element or the first node, second attestation information of the terminal; and
obtaining, by the second network element or the first node, a second trusted attestation result of the terminal based on the second attestation information and the second expected information.

42. The method according to any one of claims 28 to 41, wherein the method further comprises:
sending, by the first network element, the first trusted attestation result to the terminal.

43. An attestation method, wherein the method comprises:
sending, by a second node, a third attestation request to a third node;
receiving, by the second node, third attestation information from the third node; and
obtaining, by the second node, a trusted attestation result of the third node based on the third attestation information and third expected information.

44. The method according to claim 43, wherein the third attestation information comprises a third check value, the third check value is obtained by processing a third random number and local attestation information of the third node by using a symmetric key, and the symmetric key is a key used for trusted attestation.

45. The method according to claim 44, wherein the third attestation information further comprises the local attestation information.

46. The method according to any one of claims 43 to 45, wherein the third expected information comprises a third expected check value.

47. The method according to claim 46, wherein the third expected information further comprises third expected attestation information.

48. The method according to claim 43, wherein the method further comprises:
sending, by the second node, a trusted vector request to a third network element, wherein the trusted vector request comprises identification information of the third node; and
receiving, by the second node, a fourth trusted vector from the third network element, wherein the fourth trusted vector comprises the third expected information.

49. The method according to any one of claims 44 to 48, wherein the symmetric key is any one of the following:
a root key used for trusted attestation; and
a sixth derived key, wherein the sixth derived key is derived from the root key used for trusted attestation.

50. The method according to any one of claims 43 to 49, wherein the method further comprises:
sending, by the second node, the trusted attestation result to the third node.

51. An attestation method, wherein the method comprises:
receiving, by a third node, a third attestation request from a second node; and
sending, by the third node, third attestation information to the second node, wherein the third attestation information comprises a third check value, the third check value is obtained by processing a third random number and local attestation information of the third node by using a symmetric key, and the symmetric key is a key used for trusted attestation.

52. The method according to claim 51, wherein the third attestation information further comprises the local attestation information.

53. The method according to claim 51 or 52, wherein the symmetric key is any one of the following:
a root key used for trusted attestation; and
a sixth derived key, wherein the sixth derived key is derived from the root key used for trusted attestation.

54. The method according to any one of claims 51 to 53, wherein the method further comprises:
receiving, by the third node, a trusted attestation result of the third node from the second node, wherein the trusted attestation result is obtained based on the third attestation information and third expected information.

55. The method according to claim 54, wherein the third expected information comprises a third expected check value.

56. The method according to claim 55, wherein the third expected information further comprises third expected attestation information.

57. An attestation method, wherein the method comprises:
sending, by a second node, a third attestation request to a third node;
sending, by the third node, third attestation information to the second node; and
obtaining, by the second node, a trusted attestation result of the third node based on the third attestation information and third expected information.

58. The method according to claim 57, wherein the third attestation information comprises a third check value, the third check value is obtained by processing a third random number and local attestation information of the third node by using a symmetric key, and the symmetric key is a key used for trusted attestation.

59. The method according to claim 57 or 58, wherein the third expected information comprises a third expected check value.

60. The method according to claim 59, wherein the method further comprises:
sending, by the second node, a trusted vector request to a third network element, wherein the trusted vector request comprises identification information of the third node; and
sending, by the third network element, a fourth trusted vector to the second node, wherein the fourth trusted vector comprises the third expected information.

61. The method according to any one of claims 58 to 60, wherein the symmetric key is any one of the following:
a root key used for trusted attestation; and
a sixth derived key, wherein the sixth derived key is derived from the root key used for trusted attestation.

62. The method according to any one of claims 57 to 61, wherein the method further comprises:
receiving, by the third node, the trusted attestation result from the second node.

63. A first network element, comprising: a receiving module, configured to receive first attestation information from a terminal; and
a processing module, configured to obtain a first trusted attestation result of the terminal based on the first attestation information and first expected information.

64. A terminal, comprising:
a determining module, configured to determine first attestation information; and
a sending module, configured to send the first attestation information to a first network element.

65. A communication system, wherein the system comprises a first network element and a second network element;
the second network element is configured to send a first attestation request to the first network element, wherein the first attestation request comprises identification information of a terminal;
the first network element is configured to receive first attestation information from the terminal; and
the first network element is further configured to obtain a first trusted attestation result of the terminal based on the first attestation information and first expected information.

66. A second node, comprising:
a sending module, configured to send a third attestation request to a third node;
a receiving module, configured to receive third attestation information from the third node; and
a determining module, configured to obtain a trusted attestation result of the third node based on the third attestation information and third expected information.

67. A third node, comprising:
a receiving module, configured to receive a third attestation request from a second node; and
a sending module, configured to send third attestation information to the second node, wherein the third attestation information comprises a third check value, the third check value is obtained by processing a third random number and local attestation information of the third node by using a symmetric key, and the symmetric key is a key used for trusted attestation.

68. A communication system, wherein the system comprises a second node and a third node;
the second node is configured to send a third attestation request to the third node;
the third node is configured to send third attestation information to the second node; and
the second node is further configured to obtain a trusted attestation result of the third node based on the third attestation information and third expected information.

69. A communication apparatus, wherein the communication apparatus comprises one or more processors and one or more memories, the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 62.

70. A computer-readable storage medium, wherein the computer-readable storage medium stores instructions, and when the instructions are executed by a processor, the method according to any one of claims 1 to 62 is implemented.

71. A computer program product, comprising a computer program, wherein when the computer program runs on a processor, the method according to any one of claims 1 to 62 is implemented.
